# EUROPEAN PATENT SPECIFICATION

(11) **EP 4 287 296 B1**
(45) Date of publication and mention of the grant of the patent: **09.12.2026**
(21) Application number: 22745812.2
(22) Date of filing: 24.01.2022
(51) Int. Cl.: H01M 4/13, H01G 11/52, H01M 10/0525, H01M 50/42, H01M 50/409, H01M 50/414, H01M 50/434, H01M 50/443, H01M 50/446, H01M 50/449, H01M 50/489

(54) **COMPOSITION FOR ELECTROCHEMICAL DEVICE FUNCTIONAL LAYER, LAMINATE FOR ELECTROCHEMICAL DEVICE, AND ELECTROCHEMICAL DEVICE**
ZUSAMMENSETZUNG FÜR EINE FUNKTIONSSCHICHT EINER ELEKTROCHEMISCHEN VORRICHTUNG, LAMINAT FÜR EINE ELEKTROCHEMISCHE VORRICHTUNG SOWIE ELEKTROCHEMISCHE VORRICHTUNG
COMPOSITION POUR COUCHE FONCTIONNELLE DE DISPOSITIF ÉLECTROCHIMIQUE, STRATIFIÉ POUR DISPOSITIF ÉLECTROCHIMIQUE ET DISPOSITIF ÉLECTROCHIMIQUE

(30) Priority: 29.01.2021 JP 2021013949
(43) Date of publication of application: 06.12.2023
(73) Proprietor: Zeon Corporation, Tokyo 100-8246 (JP)
(72) Inventor: TAGUCHI, Hiroyuki, Tokyo 100-8246 (JP)
(74) Representative: Maiwald GmbH
(86) International application number: PCT/JP2022/002473
(87) International publication number: WO 2022/163591

(56) References cited:
- EP-A1- 3 758 097
- EP-A1- 3 758 097
- WO-A1-2016/110894
- JP-A- 2016 072 247
- JP-A- 2016 072 247

## Description

### TECHNICAL FIELD

The present disclosure relates to a composition for an electrochemical device functional layer, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

In recent years, further improvements to electrochemical device members such as positive electrodes, negative electrodes, and separators have been studied with the aim of achieving even higher lithium secondary battery performance. In the course of such improvements, stacking of a layer for displaying an expected function such as heat resistance or adhesiveness (i.e., a functional layer) on a separator substrate has been attempted.

As one specific example, Patent Literature (PTL) 1 discloses an aqueous resin composition for a lithium ion secondary battery binder that contains core-shell particles and an aqueous medium, wherein a core portion of the core-shell particles includes a styrene unit in a specific proportion and a shell portion of the core-shell particles includes a methyl methacrylate unit and a (meth)acrylate unit including an alkyl group having a carbon number of 4 or more in specific proportions. PTL 1 also discloses this composition being used to form an adhesive layer on the surface of a separator. As another example, PTL 2 proposes a separator having particles of a polymer that has a core-shell structure supported on a microporous polyolefin film. As yet another example, PTL 3 proposes a structure in which an active layer that is formed using a composition containing an acrylic resin having a core-shell structure is disposed on a separator substrate that contains polyethylene and polypropylene.

### CITATION LIST

### Patent Literature

PTL 1: WO2018/043200A1
PTL 2: JP2018-200786A
PTL 3: JP2018-101614A

### SUMMARY

### (Technical Problem)

In recent years, the expansion of applications for electrochemical devices has been accompanied by demand for further increasing the adhesiveness of a functional layer in a state in which the functional layer is immersed in electrolyte solution (hereinafter, also referred to as "wet adhesiveness"). More specifically, there is a need for a functional layer that can display good wet adhesiveness even under conditions where high pressing pressure cannot be applied. Moreover, an electrochemical device that includes a functional layer needs to have excellent electrolyte solution injectability and rate characteristics.

However, there is room for improvement of separators formed according to the conventional techniques described above in terms of wet adhesiveness and also in terms of further improving electrolyte solution injectability and rate characteristics of an obtained electrochemical device.

Accordingly, one object of the present disclosure is to provide a composition for a functional layer with which it is possible to form a functional layer that has excellent wet adhesiveness and can enhance electrolyte solution injectability and rate characteristics of an obtained electrochemical device.

Another object of the present disclosure is to provide a laminate for an electrochemical device including a functional layer that has excellent wet adhesiveness and can enhance electrolyte solution injectability and rate characteristics of an obtained electrochemical device, and also to provide an electrochemical device that includes this laminate for an electrochemical device and has excellent electrolyte solution injectability and rate characteristics.

### (Solution to Problem)

The inventor conducted diligent studies to achieve the objects set forth above. The inventor made a new discovery that when a functional layer of a functional layer-equipped separator is formed using a composition for an electrochemical device functional layer that contains a particulate polymer having a specific core-shell structure and a volume-average particle diameter of not less than 1.0 µm and not more than 10.0 µm, the functional layer has excellent wet adhesiveness and can enhance electrolyte solution injectability and rate characteristics of an obtained electrochemical device. In this manner, the inventor completed the present disclosure.

Specifically, the present disclosure aims to advantageously solve the problems set forth above, and a presently disclosed composition for an electrochemical device functional layer comprises a particulate polymer, a binder, and heat-resistant fine particles, wherein the particulate polymer has a core-shell structure including a core portion formed of a polymer A and a shell portion formed of a polymer B that at least partially covers an outer surface of the core portion, the polymer A includes a (meth)acrylic acid ester monomer unit, an aromatic vinyl monomer unit, and a cross-linkable monomer unit, the polymer A has a degree of swelling in electrolyte solution S_{A} of not less than a factor of 1 and not more than a factor of 8, the polymer B includes either or both of an aromatic vinyl monomer unit and a nitrile group-containing monomer unit, the polymer B has a degree of swelling in electrolyte solution S_{B} of a factor of 4 or more, the degree of swelling in electrolyte solution S_{A} and the degree of swelling in electrolyte solution S_{B} satisfy a relationship of S_{B}/S_{A} ≥ 1.2, and the particulate polymer has a volume-average particle diameter of not less than 1.0 µm and not more than 10.0 µm. The heat-resistant fine particles are selected from a group of inorganic particles and organic particles having a glass-transition temperature of 150°C or higher, and the degree of swelling in electrolyte solution, the volume-average particle diameter, and the glass transition temperature are measured as described in the examples section of the description. Through a composition for an electrochemical device functional layer containing a particulate polymer that has a core-shell structure formed of polymers A and B having degrees of swelling in electrolyte solution satisfying a specific relationship and that has a volume-average particle diameter within a specific range in this manner, it is possible to form a functional layer that has excellent wet adhesiveness and can enhance electrolyte solution injectability and rate characteristics of an obtained electrochemical device.

Note that the degree of swelling in electrolyte solution of each polymer can be measured by a method described in the EXAMPLES section of the present specification.

Also note that the "volume-average particle diameter" of a particulate polymer can be measured by a method described in the EXAMPLES section of the present specification.

Moreover, a "core-shell structure" of a particulate polymer can be confirmed through observation of the particulate polymer using a scanning electron microscope.

In the presently disclosed composition for an electrochemical device functional layer, a ratio of the core portion and the shell portion in the particulate polymer, by mass, is preferably within a range of 99.9:0.1 to 50:50. When the ratio of the core portion and the shell portion in the particulate polymer is within the specific range set forth above, it is possible to form a functional layer that has even better wet adhesiveness and can further enhance electrolyte solution injectability and rate characteristics of an obtained electrochemical device.

In the presently disclosed composition for an electrochemical device functional layer, the polymer B includes either or both of an aromatic vinyl monomer unit and a nitrile group-containing monomer unit. When the polymer B forming the shell portion of the particulate polymer includes either or both of an aromatic vinyl monomer unit and a nitrile group-containing monomer unit, it is possible to form a functional layer having even better wet adhesiveness.

Note that when a polymer is said to "include a monomer unit" in the present disclosure, this means that "a polymer obtained using that monomer includes a structural unit derived from the monomer".

In the presently disclosed composition for an electrochemical device functional layer, the particulate polymer preferably has a particle diameter distribution of 1.5 or less. When the particle diameter distribution of the particulate polymer is 1.5 or less, cycle characteristics of an obtained electrochemical device can be further enhanced.

Note that the particle diameter distribution of a particulate polymer can be measured according to a method described in the EXAMPLES section of the present specification.

Moreover, the present disclosure aims to advantageously solve the problems set forth above, and a presently disclosed laminate for an electrochemical device comprises: a substrate; and a functional layer formed using any one of the compositions for an electrochemical device functional layer set forth above on the substrate. A laminate for an electrochemical device that includes a functional layer formed using the presently disclosed composition for an electrochemical device functional layer in this manner has excellent wet adhesiveness and can enhance electrolyte solution injectability and rate characteristics of an obtained electrochemical device.

Furthermore, the present disclosure aims to advantageously solve the problems set forth above, and a presently disclosed electrochemical device comprises the laminate for an electrochemical device set forth above. An electrochemical device that includes the presently disclosed laminate for an electrochemical device has excellent electrolyte solution injectability and rate characteristics.

### (Advantageous Effect)

According to the present disclosure, it is possible to provide a composition for a functional layer with which it is possible to form a functional layer that has excellent wet adhesiveness and can enhance electrolyte solution injectability and rate characteristics of an obtained electrochemical device.

Moreover, according to the present disclosure, it is possible to provide a laminate for an electrochemical device including a functional layer that has excellent wet adhesiveness and can enhance electrolyte solution injectability and rate characteristics of an obtained electrochemical device, and also to provide an electrochemical device that includes this laminate for an electrochemical device and has excellent electrolyte solution injectability and rate characteristics.

### DETAILED DESCRIPTION

The following provides a detailed description of embodiments of the present disclosure. The presently disclosed composition for an electrochemical device functional layer (hereinafter, also referred to simply as a "composition for a functional layer") is used in formation of a functional layer of a functional layer-equipped separator for an electrochemical device (hereinafter, also referred to simply as a "functional layer") that is included in the presently disclosed laminate for an electrochemical device. Moreover, the presently disclosed laminate for an electrochemical device includes a functional layer that is formed using the presently disclosed composition for an electrochemical device functional layer. Furthermore, the presently disclosed electrochemical device is an electrochemical device that includes at least the presently disclosed laminate for an electrochemical device.

### (Composition for electrochemical device functional layer)

The presently disclosed composition for an electrochemical device functional layer contains a specific particulate polymer, a binder, and heat-resistant fine particles and optionally further contains other components. By using the presently disclosed composition for a functional layer, it is possible to form a functional layer that has excellent wet adhesiveness and can enhance electrolyte solution injectability and rate characteristics of an obtained electrochemical device.

### <Particulate polymer>

The particulate polymer contained in the composition for a functional layer is a particulate polymer that satisfies a specific structure and properties and that has a volume-average particle diameter within a specific range as described in detail below. Note that the particulate polymer may have a particulate form or may have any other form after members have been adhered via a functional layer formed using the composition for a functional layer.

### <<Structure of particulate polymer>>

The particulate polymer has a core-shell structure including a core portion formed of a polymer A and a shell portion formed of a polymer B that at least partially covers an outer surface of the core portion. The shell portion may completely cover the outer surface of the core portion or may partially cover the outer surface of the core portion. As a result of the particulate polymer having a core-shell structure such as described above, it is possible to increase wet adhesiveness of a functional layer and also to enhance electrolyte solution injectability and rate characteristics of an obtained electrochemical device in a good balance.

### <<Degree of swelling in electrolyte solution S_{A} of polymer A forming core portion>>

The degree of swelling in electrolyte solution S_{A} of the polymer A forming the core portion is required to be not less than a factor of 1 and not more than a factor of 8. Moreover, the degree of swelling in electrolyte solution S_{A} is preferably a factor of 1.2 or more, and more preferably a factor of 1.3 or more, and is preferably a factor of 6 or less, and more preferably a factor of 4 or less. When the degree of swelling in electrolyte solution S_{A} is not less than any of the lower limits set forth above, adhesiveness of a functional layer in electrolyte solution can be increased. When the degree of swelling in electrolyte solution S_{A} is not more than any of the upper limits set forth above, electrolyte solution injectability of an electrochemical device is enhanced because constriction of flow paths for electrolyte solution due to excessive swelling tends not to occur, and this enables reduction of internal resistance of the electrochemical device and enhancement of rate characteristics of the electrochemical device. Moreover, when the degree of swelling in electrolyte solution S_{A} is not more than any of the upper limits set forth above, excessive lowering of the elastic modulus of the particulate polymer can be inhibited, and cycle characteristics of an electrochemical device can be enhanced.

### <<Glass-transition temperature of polymer A forming core portion>>

The glass-transition temperature of the polymer A forming the core portion of the particulate polymer is preferably 10°C or higher, more preferably 20°C or higher, even more preferably 30°C or higher, and particularly preferably 40°C or higher, and is preferably 110°C or lower, more preferably 90°C or lower, and even more preferably 80°C or lower. When the glass-transition temperature of the polymer A is not lower than any of the lower limits set forth above, blocking resistance of an obtained functional layer can be increased. Note that "blocking resistance" of a functional layer refers to a property of inhibiting unintended adhesion (blocking) from occurring at a timing at which the functional layer is in a stacked state with another member without the aim of adhesion during a production process of an electrochemical device. Moreover, when the glass-transition temperature of the polymer A is not higher than any of the upper limits set forth above, dry adhesiveness of an obtained functional layer can be further increased.

Note that the "glass-transition temperature" of the polymer A can be measured according to a method described in the EXAMPLES section. Moreover, the glass-transition temperature of the polymer A can be adjusted by altering the chemical composition of the polymer A.

### <<Chemical composition of core portion of particulate polymer>>

The core portion is formed of the polymer A. The polymer A includes a (meth)acrylic acid ester monomer unit, an aromatic vinyl monomer unit, and a cross-linkable monomer unit.

### [(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable. Note that in the present specification, "(meth)acryl" is used to indicate "acryl" or "methacryl".

Also note that one of these (meth)acrylic acid ester monomers may be used individually, or two or more of these (meth)acrylic acid ester monomers may be used in combination in a freely selected ratio.

The proportional content of (meth)acrylic acid ester monomer units in the polymer A when all repeating units included in the polymer A are taken to be 100 mass% is preferably 10 mass% or more, and more preferably 15 mass% or more, and is preferably 80 mass% or less, and more preferably 75 mass% or less. When the proportional content of (meth)acrylic acid ester monomer units in the polymer A is not less than any of the lower limits set forth above, excessive lowering of the glass-transition temperature of the polymer A can be inhibited, and blocking resistance of an obtained functional layer can be improved. When the proportional content of (meth)acrylic acid ester monomer units is not more than any of the upper limits set forth above, good close adherence between a functional layer and a substrate can be achieved.

### [Aromatic vinyl monomer unit]

Examples of aromatic vinyl monomers that can be used to form an aromatic vinyl monomer unit include, but are not specifically limited to, styrene, α-methylstyrene, styrene sulfonic acid, butoxystyrene, and vinylnaphthalene, of which, styrene is preferable. Note that one of these aromatic vinyl monomers may be used individually, or two or more of these aromatic vinyl monomers may be used in combination in a freely selected ratio.

The proportional content of aromatic vinyl monomer units in the polymer A when all repeating units included in the polymer A are taken to be 100 mass% is preferably 20 mass% or more, and is preferably 90 mass% or less, and more preferably 85 mass% or less. When the proportional content of aromatic vinyl monomer units in the polymer A is within any of the ranges set forth above, dry adhesiveness of an obtained functional layer can be further increased.

### [Cross-linkable monomer unit]

Examples of monomers that can form a cross-linkable monomer unit include polyfunctional monomers having at least two groups displaying polymerization reactivity. Examples of such polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing ethylenically unsaturated monomers such as allyl glycidyl ether and glycidyl methacrylate. One of these cross-linkable monomers may be used individually, or two or more of these cross-linkable monomers may be used in combination. Of these cross-linkable monomers, ethylene glycol dimethacrylate is preferable.

The proportional content of cross-linkable monomer units in the polymer A when all repeating units included in the polymer A are taken to be 100 mass% is preferably not less than 0.05 mass% and not more than 2 mass%. When the proportional content of cross-linkable monomer units in the polymer A is within the range set forth above, the balance of degree of swelling in electrolyte solution and dry adhesiveness of an obtained functional layer can be further enhanced.

### [Other monomer units]

Examples of monomers that can be used to form other monomer units include acidic group-containing monomers and subsequently described nitrile group-containing monomer.

Examples of acidic group-containing monomers that can be used to form an acidic group-containing monomer unit include, but are not specifically limited to, carboxy group-containing monomers, sulfo group-containing monomers, phosphate group-containing monomers, and hydroxy group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" is used to indicate "allyl" and/or "methallyl", whereas "(meth)acryl" is used to indicate "acryl" and/or "methacryl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acid group-containing monomers may be used individually, or two or more of these acid group-containing monomers may be used in combination in a freely selected ratio.

The proportional content of other monomer units in the polymer A is not specifically limited, but when all repeating units included in the polymer A are taken to be 100 mass%, the proportional content of other monomer units is preferably 10 mass% or less, and may be 0 mass% (i.e., the polymer A may be a polymer that does not include other monomer units).

### <<Degree of swelling in electrolyte solution S_{B} of polymer B forming shell portion>>

The degree of swelling in electrolyte solution S_{B} of the polymer B forming the shell portion is required to be a factor of 4 or more, is preferably a factor of 6 or more, more preferably a factor of 7 or more, and even more preferably a factor of 8 or more, and is preferably a factor of 20 or less, more preferably a factor of 18 or less, and even more preferably a factor of 16 or less. When the degree of swelling in electrolyte solution S_{B} is not less than any of the lower limits set forth above, adhesiveness of a functional layer in electrolyte solution can be increased. When the degree of swelling in electrolyte solution S_{B} is not more than any of the upper limits set forth above, electrolyte solution injectability of an electrochemical device is enhanced because constriction of flow paths for electrolyte solution due to excessive swelling tends not to occur, and this enables reduction of internal resistance of the electrochemical device and enhancement of rate characteristics of the electrochemical device. Moreover, when the degree of swelling in electrolyte solution S_{B} is not more than any of the upper limits set forth above, excessive lowering of the elastic modulus of the particulate polymer can be inhibited, and cycle characteristics of an electrochemical device can be enhanced.

### <<Glass-transition temperature of polymer B forming shell portion>>

The glass-transition temperature of the polymer B forming the shell portion of the particulate polymer is preferably 70°C or higher, more preferably 80°C or higher, and even more preferably 90°C or higher, and is preferably 150°C or lower, more preferably 120°C or lower, and even more preferably 110°C or lower. When the glass-transition temperature of the polymer B is not lower than any of the lower limits set forth above, blocking resistance of an obtained functional layer can be increased. Moreover, when the glass-transition temperature of the polymer B is not higher than any of the upper limits set forth above, dry adhesiveness of an obtained functional layer can be further increased.

Note that the "glass-transition temperature" of the polymer B can be measured according to a method described in the EXAMPLES section. Moreover, the glass-transition temperature of the polymer B can be adjusted by altering the chemical composition of the polymer B. More specifically, the glass-transition temperature of the polymer B can be raised by increasing the amount of a cross-linkable monomer that is used in production of the polymer B, for example.

### <<Chemical composition of shell portion of particulate polymer>>

The shell portion is formed of the polymer B. The polymer B preferably includes either or both of an aromatic vinyl monomer unit and a nitrile group-containing monomer unit. When the polymer B includes either or both of an aromatic vinyl monomer unit and a nitrile group-containing monomer unit, wet adhesiveness of a functional layer can be further increased. Moreover, from a viewpoint of further enhancing this effect, it is preferable that the polymer B includes both an aromatic vinyl monomer unit and a nitrile group-containing monomer unit. Furthermore, in addition to these monomer units, the polymer B may include a (meth)acrylic acid ester monomer unit, a cross-linkable monomer unit, and other monomer units.

### [Aromatic vinyl monomer unit]

Any of the previously described aromatic vinyl monomer units can be adopted as an aromatic vinyl monomer unit. In particular, styrene is preferable.

In a case in which the polymer B includes an aromatic vinyl monomer unit, the proportional content of aromatic vinyl monomer units in the polymer B when all repeating units included in the polymer B are taken to be 100 mass% is preferably 30 mass% or more, and more preferably 45 mass% or more, and is preferably 80 mass% or less, and more preferably 70 mass% or less. When the proportional content of aromatic vinyl monomer units is within any of the ranges set forth above, wet adhesiveness of a functional layer can be further increased. Moreover, when the proportional content of aromatic vinyl monomer units is not more than any of the upper limits set forth above, cycle characteristics of an electrochemical device can be further enhanced.

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile is preferable.

Note that one of these nitrile group-containing monomers may be used individually, or two or more of these nitrile group-containing monomers may be used in combination in a freely selected ratio.

In a case in which the polymer B includes a nitrile group-containing monomer unit, the proportional content of nitrile group-containing monomer units in the polymer B when all repeating units included in the polymer B are taken to be 100 mass% is preferably 5 mass% or more, more preferably 10 mass% or more, and even more preferably 20 mass% or more, and is preferably 60 mass% or less, and more preferably 50 mass% or less. When the proportional content of nitrile group-containing monomer units is within any of the ranges set forth above, wet adhesiveness of a functional layer can be further increased.

Moreover, the total proportion constituted by aromatic vinyl monomer units and nitrile group-containing monomer units in the polymer B when all repeating units included in the polymer B are taken to be 100 mass% is preferably 5 mass% or more, and more preferably 10 mass% or more, and is preferably 95 mass% or less, and more preferably 90 mass% or less. When the total proportion constituted by aromatic vinyl monomer units and nitrile group-containing monomer units in the polymer B is within any of the ranges set forth above, wet adhesiveness of a functional layer can be further increased.

### [(Meth)acrylic acid ester monomer unit]

Any of the previously described (meth)acrylic acid ester monomer units can be adopted as a (meth)acrylic acid ester monomer unit. In particular, n-butyl acrylate and methyl methacrylate are preferable.

The proportional content of (meth)acrylic acid ester monomer units in the polymer B when all repeating units included in the polymer B are taken to be 100 mass% is preferably 5 mass% or more, and more preferably 10 mass% or more, and is preferably 95 mass% or less, and more preferably 90 mass% or less. When the proportional content of (meth)acrylic acid ester monomer units is not less than any of the lower limits set forth above, excessive lowering of the glass-transition temperature of the polymer B can be inhibited, and blocking resistance of an obtained functional layer can be improved. When the proportional content of (meth)acrylic acid ester monomer units is not more than any of the upper limits set forth above, good close adherence between a functional layer and a substrate can be achieved.

### [Cross-linkable monomer unit]

Any of the previously described cross-linkable monomer units can be adopted as a cross-linkable monomer unit. In particular, ethylene glycol dimethacrylate is preferable.

The proportional content of cross-linkable monomer units in the polymer B when all repeating units included in the polymer B are taken to be 100 mass% is preferably 0.1 mass% or more, and is preferably 5 mass% or less, and more preferably 2 mass% or less. When the proportional content of cross-linkable monomer units in the polymer B is within any of the ranges set forth above, the balance of degree of swelling in electrolyte solution and dry adhesiveness of an obtained functional layer can be further enhanced.

### [Other monomer units]

Examples of other monomers that can form other monomer units include, but are not specifically limited to, acidic group-containing monomer such as previously described.

The proportional content of other monomer units in the polymer B is not specifically limited, but when all repeating units included in the polymer B are taken to be 100 mass%, the proportional content of other monomer units is preferably 10 mass% or less, and may be 0 mass% (i.e., the polymer B may be a polymer that does not include other monomer units).

### <<Ratio S_{B}/S_{A} of degree of swelling in electrolyte solution S_{A} and degree of swelling in electrolyte solution S_{B}>>

The ratio S_{B}/S_{A} of the previously described degree of swelling in electrolyte solution S_{A} and degree of swelling in electrolyte solution S_{B} is required to be 1.2 or more, and is preferably 1.3 or more, and more preferably 1.5 or more. No specific limitations are placed on the upper limit for the value of the ratio S_{B}/S_{A}, and the ratio S_{B}/S_{A} can be 10.0 or less. When the value of the ratio S_{B}/S_{A} is not less than any of the lower limits set forth above, elastic force of the core portion tends to be higher than elastic force of the shell portion in the particulate polymer in a state in which the particulate polymer is immersed in electrolyte solution, and thus, in response to expansion and contraction of a member arising during repeated charging and discharging of an electrochemical device, the core portion can maintain a particulate form while the shell portion follows this expansion and contraction and thereby functions to maintain an adhered state between members, and the occurrence of buckling can be inhibited. In other words, the core portion does not deform in response to expansion and contraction of a member, whereas the shell portion can deform and respond to this expansion and contraction.

### <<Ratio of core portion and shell portion>>

A ratio of the core portion and the shell portion in the particulate polymer, by mass (core portion: shell portion), is preferably within a range of 99.9:0.1 to 50:50, more preferably within a range of 99:1 to 55:45, even more preferably within a range of 95:5 to 60:40, and particularly preferably within a range of 90:10 to 65:35. When the ratio of the core portion is not less than any of the lower limits set forth above, it is possible to inhibit spreading out of the particulate polymer in a state in which adhesive capability is displayed in electrolyte solution, which makes it possible to suppress a rise of internal resistance of an electrochemical device, and, as a result, to enhance rate characteristics and electrolyte solution injectability of the electrochemical device. When the ratio of the core portion is not more than any of the upper limits set forth above, wet adhesiveness of a functional layer can be further increased because the particulate polymer swells to an appropriate degree in electrolyte solution.

### <<Volume-average particle diameter of particulate polymer>>

The volume-average particle diameter of the particulate polymer is required to be not less than 1.0 µm and not more than 10.0 µm, is preferably 2.5 µm or more, and more preferably 5.0 µm or more, and is preferably 9.0 µm or less, and more preferably 8.0 µm or less. When the volume-average particle diameter of the particulate polymer is within any of the ranges set forth above, dry adhesiveness of an obtained functional layer can be further increased. Although the reason for this is not clear, it is thought that when the volume-average particle diameter of the particulate polymer is not less than any of the lower limits set forth above, a portion of the particulate polymer can be caused to protrude from the surface of a functional layer, thereby enabling higher dry adhesiveness at the functional layer surface. It is also thought that when the volume-average particle diameter of the particulate polymer is not more than any of the upper limits set forth above, detachment of the particulate polymer from a functional layer during formation of the functional layer can be inhibited, and dry adhesiveness of the obtained functional layer can be increased.

Note that the volume-average particle diameter of the particulate polymer can be adjusted through the type and amount of a metal hydroxide used in production of the particulate polymer, for example.

### <<Particle diameter distribution of particulate polymer>>

The particle diameter distribution of the particulate polymer is preferably 1.5 or less, and more preferably 1.3 or less. When the particle diameter distribution of the particulate polymer is not more than any of the upper limits set forth above, non-uniformity of functional layer thickness after adhesion decreases, and cycle characteristics of an electrochemical device can be further enhanced. No specific limitations are placed on the lower limit for the particle diameter distribution, and the particle diameter distribution can be 1.0 or more, for example.

### [Production of particulate polymer]

The particulate polymer can be produced through polymerization of a monomer composition that contains the monomers described above, carried out in an aqueous solvent such as water, for example. The proportion constituted by each monomer in the monomer composition is normally the same as the proportion constituted by each monomer unit in the particulate polymer.

The method of polymerization is not specifically limited and may, for example, be suspension polymerization, emulsion polymerization and aggregation, pulverization, or the like. Of these methods, suspension polymerization and emulsion polymerization and aggregation are preferable from a viewpoint of simplicity and cost effectiveness, and suspension polymerization is more preferable. The polymerization reaction may be radical polymerization, living radical polymerization, or the like.

### [Other compounding agents]

The monomer composition used in production of the particulate polymer may have other compounding agents such as chain transfer agents, polymerization regulators, polymerization reaction retardants, reactive fluidizers, fillers, flame retardants, antioxidants, and colorants compounded therewith in any amount.

The following describes, as one example, a method of producing the particulate polymer by suspension polymerization.

### [Production of particulate polymer by suspension polymerization]

### (1) Production of monomer composition

First, a monomer composition (A) having a chemical composition corresponding to the chemical composition of the polymer A of the core portion and a monomer composition (B) having a chemical composition corresponding to the chemical composition of the polymer B of the shell portion are prepared. In this preparation, various monomers are compounded in accordance with the chemical compositions of the polymer A and the polymer B, and other compounding agents that are added as necessary are also mixed therewith.

### (2) Formation of droplets

Next, the monomer composition (A) is dispersed in water, a polymerization initiator is added, and then droplets of the monomer composition (A) are formed. No specific limitations are placed on the method by which the droplets are formed. For example, the droplets may be formed by performing shear stirring of water containing the monomer composition (A) using a disperser such as an emulsifying/dispersing device.

The polymerization initiator that is used may be an oil-soluble polymerization initiator such as t-butyl peroxy-2-ethylhexanoate or azobisisobutyronitrile, for example. Note that the polymerization initiator may be added after dispersion of the monomer composition (A) in water and before formation of droplets, or may be added to the monomer composition (A) before dispersion in water.

From a viewpoint of stabilizing droplets of the monomer composition (A) formed in water, it is preferable that a dispersion stabilizer is added to the water and that droplets of the monomer composition (A) are then formed. The dispersion stabilizer may be sodium dodecylbenzenesulfonate, a metal hydroxide such as magnesium hydroxide, or the like, for example.

### (3) Polymerization

Once droplets of the monomer composition (A) have been formed, the water containing the formed droplets is heated so as to initiate polymerization. At a stage at which the polymerization conversion rate is sufficiently high, the monomer composition (B) is added, and polymerization is continued so as to form a particulate polymer having a core-shell structure in the water. The reaction temperature during polymerization is preferably not lower than 50°C and not higher than 95°C. Moreover, the reaction time during polymerization is preferably not less than 1 hour and not more than 10 hours, and is preferably 8 hours or less, and more preferably 6 hours or less.

### (4) Washing, filtration, dehydration, and drying step

Once polymerization has ended, the water containing the particulate polymer may be subjected to washing, filtration, and drying by standard methods to obtain the particulate polymer having a core-shell structure.

Note that in the present example, the monomer composition (B) is continuously added into the same polymerization system as the monomer composition (A) in order to form the core-shell structure in the step described above in (3) (i.e., core-shell structure formation is performed through subsequent monomer addition). However, the production method of the particulate polymer having a core-shell structure is not limited to the above-described example. For example, the monomer composition (B) may be polymerized first to obtain the polymer B, and then the polymer B may be dissolved in a solution containing the monomer composition (A), the same step as described above in (2) may be performed to form droplets containing the polymer B and the monomer composition (A), and water containing the formed droplets may subsequently be heated so as to initiate polymerization. The polymerization conditions can be the same as the conditions in the step described above in (3). The same step as described above in (4) may then be performed, during which, the polymer B undergoes phase separation to form a shell portion, thereby making it possible to obtain a particulate polymer having a core-shell structure (i.e., core-shell structure formation is performed through phase separation). Note that polyvinyl alcohol or the like may be added as a dispersion stabilizer when the monomer composition (B) is polymerized to obtain the polymer B.

Of these production methods, the previously described method in which "the monomer composition (B) is continuously added into the same polymerization system as the monomer composition (A) in order to form the core-shell structure in the step in (3)" is preferable from a viewpoint of simplicity.

Note that the quantitative ratio of the monomer composition (A) and the monomer composition (B) can be set as appropriate so as to satisfy the previously described "ratio of the core portion and the shell portion" in the particulate polymer.

### <Binder>

The binder binds the heat-resistant fine particles to one another in a functional layer. The binder may be a known polymer that is used as a binder such as a conjugated diene polymer, an acrylic polymer, polyvinylidene fluoride (PVDF), or polyvinyl alcohol (PVOH), for example. One binder may be used individually, or two or more binders may be used in combination. The binder is preferably a water-insoluble polymer such as a conjugated diene polymer, an acrylic polymer, or polyvinylidene fluoride (PVDF) that can be dispersed in a dispersion medium such as water, is more preferably a conjugated diene polymer or an acrylic polymer, and is even more preferably an acrylic polymer. Note that in the case of a functional layer that is adopted at the surface of a positive electrode in an electrochemical device, the binder is preferably a polymer other than a conjugated diene polymer.

When a polymer is said to be "water-insoluble" in the present disclosure, this means that when 0.5 g of the polymer is dissolved in 100 g of water at a temperature of 25°C, insoluble content is 90 mass% or more.

The term "conjugated diene polymer" as used here refers to a polymer that includes a conjugated diene monomer unit. Specific examples of conjugated diene polymers include, but are not specifically limited to, copolymers that include an aromatic vinyl monomer unit and an aliphatic conjugated diene monomer unit such as styrene-butadiene copolymer (SBR); butadiene rubber (BR); acrylic rubber (NBR) (copolymer including an acrylonitrile unit and a butadiene unit); and hydrogenated products thereof.

Moreover, the term "acrylic polymer" refers to a polymer that includes a (meth)acrylic acid ester monomer unit.

Note that one of these binders may be used individually, or two or more of these binders may be used in combination in a freely selected ratio.

An acrylic polymer that can preferably be used as the binder may, for example, be a polymer that includes a cross-linkable monomer unit, a (meth)acrylic acid ester monomer unit, and an acidic group-containing monomer unit such as previously described, but is not specifically limited thereto.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. Through the proportion constituted by (meth)acrylic acid ester monomer units being not less than the lower limit of any of the ranges set forth above, adhesiveness of a functional layer can be increased. Moreover, through the proportion being not more than any of the upper limits set forth above, electrochemical characteristics of an electrochemical device that includes a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. Through the proportion constituted by cross-linkable monomer units being not less than any of the lower limits set forth above, electrochemical characteristics of an electrochemical device that includes a functional layer can be further enhanced. Moreover, through the proportion constituted by cross-linkable monomer units being not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. Through the proportion constituted by acid group-containing monomer units being not less than any of the lower limits set forth above, dispersibility of the binder in the composition for a functional layer and in a functional layer can be increased, and electrochemical characteristics of an electrochemical device that includes a functional layer can be sufficiently enhanced. Moreover, through the proportion constituted by acid group-containing monomer units being not more than any of the upper limits set forth above, residual water content in a functional layer can be reduced, and electrochemical characteristics of an electrochemical device can be sufficiently enhanced.

Note that the acrylic polymer may also include other monomer units.

### <<Glass-transition temperature of binder>>

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, adhesiveness and strength of a functional layer can be increased. On the other hand, when the glass-transition temperature of the binder is not higher than any of the upper limits set forth above, flexibility of a functional layer can be increased.

### [Content of binder]

The content of the binder is preferably 0.1 parts by mass or more, more preferably 0.2 parts by mass or more, and even more preferably 0.5 parts by mass or more per 100 parts by mass of the heat-resistant fine particles, and is preferably 20 parts by mass or less, more preferably 15 parts by mass or less, and even more preferably 10 parts by mass or less per 100 parts by mass of the heat-resistant fine particles. When the content of the binder is not less than any of the lower limits set forth above, detachment of the particulate polymer from a functional layer can be sufficiently prevented, and adhesiveness of the functional layer can be sufficiently increased. On the other hand, when the content of the binder is not more than any of the upper limits set forth above, reduction of ion conductivity of a functional layer can be inhibited, and deterioration of rate characteristics of an electrochemical device can be inhibited.

The binder can be produced through polymerization of a monomer composition that contains the monomers described above, carried out in an aqueous solvent such as water, for example, but is not specifically limited to being produced in this manner. The proportion constituted by each monomer in the monomer composition is normally the same as the proportion constituted by each monomer unit in the binder.

The polymerization method and the polymerization reaction are not specifically limited and may, for example, be any of the polymerization methods and polymerization reactions given as examples for the polymerization method of the previously described particulate polymer.

Moreover, although the binder may have a particulate form or may have a non-particulate form, it is preferable that the binder has a particulate form from a viewpoint that detachment of components contained in a functional layer can be inhibited well.

### <<Heat-resistant fine particles>>

The heat-resistant fine particles that are contained in the functional layer are selected from a group of fine particles formed of an inorganic material (i.e., inorganic fine particles) or fine particles formed of an organic material (i.e., organic fine particles) that are electrochemically stable and are stably present in the environment of use of an electrochemical device.

Note that inorganic fine particles may be used by themselves or organic fine particles may be used by themselves as the heat-resistant fine particles, or inorganic fine particles and organic fine particles may be used in combination as the heat-resistant fine particles.

### [Inorganic fine particles]

Examples of inorganic fine particles include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, or the like as necessary. Note that one type of inorganic fine particles may be used individually, or two or more types of inorganic fine particles may be used in combination.

### [Organic fine particles]

The organic fine particles are fine particles formed of a polymer that does not display adhesiveness and differ from the specific particulate polymer and the binder that were previously described.

Examples of organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamide imide, melamine resin, phenolic resin, and benzoguanamine-formaldehyde condensate; particles of heat-resistant polymers such as polysulfone, polyacrylonitrile, polyaramid, polyacetal, and thermoplastic polyimide; modified products and derivatives of any of the preceding examples; and heat-resistant organic particles disclosed in WO2019/065416A1. One type of organic fine particles may be used individually, or two or more types of organic fine particles may be used in combination.

Note that the organic fine particles are formed of a polymer that does not display adhesiveness as previously described. Specifically, the polymer forming the organic fine particles has a glass-transition temperature of 150°C or higher.

Of the heat-resistant fine particles described above, inorganic fine particles or organic fine particles formed of a polymer having a glass-transition temperature of 150°C or higher are preferable from a viewpoint of further improving heat resistance of a device member formed of a laminate, inorganic fine particles are more preferable, and particles formed of alumina (alumina particles), particles formed of boehmite (boehmite particles), particles formed of barium sulfate (barium sulfate particles), or particles formed of magnesium hydroxide (magnesium hydroxide particles) are even more preferable.

### [Properties of heat-resistant fine particles]

The volume-average particle diameter of the heat-resistant fine particles is preferably 0.1 µm or more, more preferably 0.2 µm or more, and even more preferably 0.3 µm or more, and is preferably 1.0 µm or less, more preferably 0.9 µm or less, and even more preferably 0.8 µm or less. When the volume-average particle diameter of the heat-resistant fine particles is 0.1 µm or more, it is possible to inhibit reduction of ion conductivity of a functional layer caused by excessively dense packing of the heat-resistant fine particles in the functional layer and to cause an electrochemical device to display excellent rate characteristics. On the other hand, when the volume-average particle diameter of the heat-resistant fine particles is 1.0 µm or less, it is possible to cause a device member that is formed of a laminate including a functional layer to sufficiently display excellent heat resistance even in a situation in which the thickness of the functional layer is reduced. Consequently, heat resistance of the device member can be sufficiently ensured while also increasing the capacity of an electrochemical device.

### <Volume ratio of heat-resistant fine particles and particulate polymer>

With regards to the volume ratio of the heat-resistant fine particles and the particulate polymer, a ratio of heat-resistant fine particles:particulate polymer is preferably within a range of 75:25 to 60:40, and more preferably within a range of 70:30 to 65:35. When the volume ratio of the heat-resistant fine particles and the particulate polymer is within any of the ranges set forth above, this results in a better balance of heat shrinkage resistance and adhesiveness of a functional layer.

### <Other components>

The composition for a functional layer may contain any other components besides the components described above. These other components are not specifically limited so long as they do not affect electrochemical reactions in an electrochemical device, and examples thereof include known additives such as dispersants, viscosity modifiers, and wetting agents. One of these other components may be used individually, or two or more of these other components may be used in combination.

### <Production method of composition for electrochemical device functional layer>

No specific limitations are placed on the method by which the composition for a functional layer is produced. For example, the composition for a functional layer can be produced by mixing the above-described particulate polymer, binder, heat-resistant fine particles, water as a dispersion medium, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

The specific particulate polymer described above is preferably premixed with a dispersant such as a nonionic surfactant, an anionic surfactant, a cationic surfactant, or an amphoteric surfactant prior to being mixed with the heat-resistant fine particles and the binder. Of these examples, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; alkylbenzene sulfonic acid salts such as sodium dodecylbenzenesulfonate, sodium laurylbenzenesulfonate, and sodium hexadecylbenzenesulfonate; and aliphatic sulfonic acid salts such as sodium laurylsulfonate, sodium dodecylsulfonate, and sodium tetradecylsulfonate. The amount of the dispersant relative to 100 parts by mass of the particulate polymer is preferably 0.01 parts by mass or more, more preferably 0.05 parts by mass or more, and even more preferably 0.1 parts by mass or more, and is preferably 0.5 parts by mass or less, more preferably 0.4 parts by mass or less, and even more preferably 0.3 parts by mass or less. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, it is possible to suppress an increase of internal resistance and inhibit deterioration of rate characteristics of an obtained electrochemical device.

### (Laminate for electrochemical device)

The laminate for an electrochemical device includes a substrate and a functional layer for an electrochemical device formed on the substrate using the composition for a functional layer set forth above. The functional layer for an electrochemical device contains at least the above-described particulate polymer, binder, and heat-resistant fine particles and also other components that are used as necessary. Note that components contained in the functional layer are components that were contained in the composition for a functional layer set forth above, and the preferred ratio of these components is the same as the preferred ratio of the components in the composition for a functional layer. As a result of the laminate for an electrochemical device including a functional layer that is formed using the composition for a functional layer set forth above, the laminate for an electrochemical device has excellent wet adhesiveness, and can enhance electrolyte solution injectability and rate characteristics of an electrochemical device obtained using this laminate.

### <Substrate>

The substrate may be selected as appropriate depending on the type of electrochemical device member for which the presently disclosed laminate is used. For example, in a case in which the presently disclosed laminate is used as a separator, a separator substrate is used as the substrate. Moreover, in a case in which the presently disclosed laminate is used as an electrode, for example, an electrode substrate is used as the substrate.

### <<Separator substrate>>

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.

Of these separator substrates, a microporous membrane formed of a polyolefinic resin is preferable from a viewpoint that this makes it possible to increase the ratio of electrode active material in an electrochemical device and to increase the volumetric capacity of the electrochemical device.

Although the separator substrate may be of any thickness, the thickness thereof is preferably not less than 5 µm and not more than 30 µm, more preferably not less than 5 µm and not more than 20 µm, and even more preferably not less than 5 µm and not more than 18 µm.

### <<Electrode substrate>>

The electrode substrate (positive electrode substrate or negative electrode substrate) is not specifically limited and may, for example, be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector may be known examples thereof such as those described in JP2013-145763A, for example.

### <Production method of laminate>

No specific limitations are placed on the method by which the presently disclosed laminate is produced. For example, a method in which a functional layer is formed on a releasable sheet and then this functional layer is transferred onto the substrate may be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

### <<Supply step>>

In the supply step, the presently disclosed composition for a functional layer set forth above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this facilitates control of thickness of the produced functional layer.

Examples of methods by which the composition for a functional layer may be applied onto the substrate include, but are not specifically limited to, doctor blading, reverse roll coating, direct roll coating, gravure coating, bar coating, extrusion coating, and brush coating.

Note that in the supply step, a coating film of the composition for a functional layer may be formed at just one side of the substrate or coating films of the composition for a functional layer may be formed at both sides of the substrate.

### <<Drying step>>

In the drying step, the coating film of the composition for a functional layer that has been formed on the substrate in the supply step is dried so as to remove the dispersion medium and form a functional layer.

The coating film of the composition for a functional layer may be dried by any commonly known method without any specific limitations. Examples of drying methods that may be used include drying by warm, hot, or lowhumidity air; drying in a vacuum; and drying by irradiation with infrared light, an electron beam, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate so as to form a functional layer, and then the supply step and the drying step may be further performed with respect to the other side of the substrate so as to form a functional layer.

The functional layer that is formed using the composition for a functional layer normally has a plurality of heat-resistant fine particles stacked in a thickness direction of the functional layer. The thickness of a layer formed through stacking of heat-resistant fine particles in the thickness direction of the functional layer (hereinafter, also referred to as a "heat-resistant fine particle layer") is preferably 0.5 µm or more, more preferably 0.8 µm or more, and even more preferably 1 µm or more, and is preferably 6 µm or less, more preferably 5 µm or less, and even more preferably 3.5 µm or less. When the thickness of the heat-resistant fine particle layer is not less than any of the lower limits set forth above, the functional layer has extremely good heat resistance. On the other hand, when the thickness of the heat-resistant fine particle layer is not more than any of the upper limits set forth above, ion diffusivity of the functional layer can be ensured, and rate characteristics of an electrochemical device can be further enhanced.

### [Ratio of volume-average particle diameter of particulate polymer relative to thickness of heat-resistant fine particle layer]

A ratio of the volume-average particle diameter of the particulate polymer relative to the thickness of the heat-resistant fine particle layer (volume-average particle diameter of particulate polymer/thickness of heat-resistant fine particle layer) is preferably 0.5 or more, more preferably 1.5 or more, and even more preferably 2.5 or more, and is preferably 10.0 or less, more preferably 9.0 or less, and even more preferably 8.0 or less. When the ratio of the volume-average particle diameter of the particulate polymer relative to the thickness of the heat-resistant fine particle layer is not less than any of the lower limits set forth above, it is easier for the particulate polymer to protrude relative to the surfaces of the heat-resistant fine particles at a thickness direction surface of the functional layer, and thus good adhesiveness can be displayed. Moreover, when the ratio of the volume-average particle diameter of the particulate polymer relative to the thickness of the heat-resistant fine particle layer is not more than any of the upper limits set forth above, the number of adhesion points of the particulate polymer increases, and thus good adhesiveness can be displayed.

### (Electrochemical device)

The presently disclosed electrochemical device includes electrodes and a separator, and a feature thereof is that it includes the presently disclosed laminate set forth above as at least one of an electrode and a separator. The presently disclosed electrochemical device has excellent electrolyte solution injectability and rate characteristics as a result of the presently disclosed laminate set forth above being used as at least one device member among an electrode and a separator. An electrochemical device having excellent electrolyte solution injectability and rate characteristics is compatible with fast charging.

The presently disclosed electrochemical device may be, but is not specifically limited to, a lithium ion secondary battery, an electric double-layer capacitor, or a lithium ion capacitor, for example, and is preferably a lithium ion secondary battery.

Although the following description gives a lithium ion secondary battery as one example of the presently disclosed electrochemical device and describes a case in which the presently disclosed laminate set forth above is used as a separator of the lithium ion secondary battery, the presently disclosed electrochemical device is not limited to the following example.

### <Positive electrode and negative electrode>

An electrode that is formed of a known electrode substrate (positive electrode substrate or negative electrode substrate) such as previously described in the "Substrate" section can be used as a positive electrode or negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li are preferable because they readily dissolve in solvents and exhibit a high degree of dissociation. Note that one electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, measurements and evaluations of various attributes were performed as follows.

### <Glass-transition temperature of particulate polymer and binder>

A particulate polymer and a binder produced in each example or comparative example were each used as a measurement sample. The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 500°C and a heating rate of 10°C/min, and with an empty aluminum pan as a reference, so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

Note that measurement samples were produced as described below for a particulate polymer having a core-shell structure. For each of a polymer of a core portion and a polymer of a shell portion, a water dispersion containing the polymer serving as a measurement sample was produced under the same polymerization conditions as for the core portion or the shell portion using the monomers, various additives, and so forth used in formation of the core portion or the shell portion. The produced water dispersion was then dried to obtain a measurement sample.

### <Degree of swelling in electrolyte solution>

A water dispersion containing a measurement sample was loaded into a petri dish made of polytetrafluoroethylene and was dried under conditions of 48 hours at 25°C to produce a powder. Approximately 0.2 g of the obtained powder was pressed at 200°C and 5 MPa for 2 minutes to obtain a film. The obtained film was then cut to 1 cm-square to obtain a test specimen. The mass WO of this test specimen was measured.

The test specimen described above was immersed in electrolyte solution at 60°C for 72 hours. Thereafter, the test specimen was removed from the electrolyte solution, electrolyte solution on the surface of the test specimen was wiped off, and the mass W1 of the test specimen after immersion was measured.

The measured masses WO and W1 were used to calculate the degree of swelling in electrolyte solution S (factor) by S = W1/WO.

Note that the electrolyte solution was a solution obtained by dissolving LiPF₆ with a concentration of 1 mol/L as a supporting electrolyte in a mixed solvent of ethylene carbonate (EC), diethyl carbonate (DEC), and vinylene carbonate (VC) (volume ratio: EC/DEC/VC = 68.5/30/1.5).

The measurement described above was performed for both a measurement sample of a polymer A and a measurement sample of a polymer B so as to determine both a degree of swelling in electrolyte solution S_{A} and a degree of swelling in electrolyte solution S_{B}. In addition, a value of S_{B}/S_{A} was calculated based on the determined values.

### <Volume-average particle diameter of binder>

The volume-average particle diameter of a binder produced in each example was measured by laser diffraction. Specifically, a water dispersion (adjusted to solid content concentration of 0.1 mass%) containing the produced binder was used as a sample. Moreover, in a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <Volume-average particle diameter and particle diameter distribution of particulate polymer>

A particulate polymer produced in each example or comparative example was used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and 3 minutes of dispersing was performed using a 20 W (Watt) ultrasonic disperser. Thereafter, the volume-average particle diameter (Dv) of the measurement sample was measured using a particle size analyzer (Multisizer produced by Beckman Coulter, Inc.) under conditions of an aperture diameter of 20 µm, a medium of ISOTON II, and a measured particle count of 100,000. In addition, the number-average particle diameter (Dn) of the particulate polymer was measured, and the particle diameter distribution (Dv/Dn) of the particulate polymer was calculated.

### <Volume-average particle diameter of heat-resistant fine particles>

In a particle diameter distribution (by volume) measured by laser diffraction, the particle diameter (D50) at which cumulative volume calculated from a small diameter end of the distribution reached 50% was taken to be the volume-average particle diameter of heat-resistant fine particles.

### <Thickness of heat-resistant fine particle layer>

A cross-section of a functional layer-equipped separator was observed using the aforementioned field emission scanning electron microscope (FE-SEM), and the thickness of a heat-resistant fine particle layer was calculated from an obtained SEM image. Note that the thickness of the heat-resistant fine particle layer was taken to be the distance from the surface of a separator substrate at which the functional layer was formed to a heat-resistant fine particle furthest separated therefrom in a perpendicular direction.

### <Ratio of volume-average particle diameter of particulate polymer and thickness of heat-resistant fine particle layer in functional layer>

A ratio of the volume-average particle diameter of a particulate polymer and the thickness of a heat-resistant fine particle layer in a functional layer (volume-average particle diameter of particulate polymer/thickness of heat-resistant fine particle layer) was determined based on the volume-average particle diameter of the particulate polymer and the thickness of the heat-resistant fine particle layer in the functional layer that were determined as described above.

### <Volume ratio and mass ratio of heat-resistant fine particles and particulate polymer>

The volume ratio of heat-resistant fine particles and a particulate polymer (heat-resistant fine particles/particulate polymer) and also the mass ratio thereof (heat-resistant fine particles/particulate polymer) were determined from charged amounts of the heat-resistant fine particles (alumina/organic fine particles) and the particulate polymer in production of a slurry composition. Note that the density of alumina was taken to be 4 g/cm³ in calculation. Moreover, the density of organic fine particles used in Example 13 was taken to be 1 in calculation.

### <Dry adhesiveness>

A positive electrode, a negative electrode, and a functional layer-equipped separator produced in each example or comparative example were each cut out as 10 mm in width and 50 mm in length. The positive electrode and the functional layer-equipped separator were then stacked and were pressed by roll pressing under conditions of a temperature of 50°C, a load of 8 kN/m, and a pressing rate of 30 m/min to obtain a joined product in which the positive electrode and the functional layer-equipped separator were joined together. Note that stacking was performed such that the positive electrode and a front surface of the functional layer-equipped separator faced each other.

The obtained joined product was placed with the surface at the current collector-side of the positive electrode facing downward, and cellophane tape was affixed to the surface of the electrode. Tape prescribed by JIS Z1522 was used as the cellophane tape. Moreover, the cellophane tape was fixed to a horizontal test stage in advance. One end of the functional layer-equipped separator was subsequently pulled vertically upward at a pulling speed of 50 mm/min to peel off the functional layer-equipped separator, and the stress during this peeling was measured.

The stress was also measured for the negative electrode produced in each example or comparative example by performing the same operations as when the positive electrode was used. Note that stacking was performed such that the negative electrode and a rear surface of the functional layer-equipped separator faced each other.

The stress measurement described above was performed a total of 6 times for three joined products of a positive electrode and a functional layer-equipped separator and three joined products of a negative electrode and a functional layer-equipped separator, an average value of the stresses was determined, and the obtained average value was taken to be the peel strength (N/m).

The calculated peel strength was used to evaluate dry adhesiveness of an electrode and a functional layer-equipped separator by the following standard. A larger peel strength indicates that a functional layer has better dry adhesiveness (i.e., indicates better adhesiveness of battery members via a functional layer in a state in which the battery members are not immersed in electrolyte solution during a production process of a secondary battery).
A: Peel strength of 3 N/m or more
B: Peel strength of not less than 2 N/m and less than 3 N/m
C: Peel strength of not less than 1 N/m and less than 2 N/m
D: Peel strength of less than 1 N/m

### <Wet adhesiveness>

A composition for a functional layer obtained in each example or comparative example was applied onto the surface of a separator substrate, and the composition for a functional layer on the separator substrate was dried at 50°C for 10 minutes to form a functional layer (thickness: 2 µm). This functional layer-equipped separator was used as a separator for evaluation. The functional layer-equipped separator was cut out as a strip shape of 10 mm × 100 mm. The separator was placed along a surface (negative electrode mixed material layer-side) of a negative electrode produced in each example or comparative example and was then hot pressed at a temperature of 85°C and a pressure of 0.5 MPa for 6 minutes to produce a laminate including the negative electrode and the functional layer-equipped separator. This laminate was taken to be a test specimen.

The test specimen was placed in laminate packing with approximately 400 µL of electrolyte solution. After 1 hour, the test specimen, together with the laminate packing, was pressed at 25°C and a pressure of 0.1 MPa for 60 minutes. The electrolyte solution was a solution obtained by dissolving LiPF₆ with a concentration of 1 mol/L as a supporting electrolyte in a mixed solvent of EC, DEC, and vinylene carbonate (VC) (EC/DEC/VC (volume mixing ratio at 25°C) = 68.5/30/1.5).

The test specimen was then taken out, and electrolyte solution on the surface of the test specimen was wiped off. Next, the test specimen was placed with the surface at the current collector-side of the negative electrode facing downward, and cellophane tape was attached to the surface at the current collector-side of the negative electrode. Tape prescribed by JIS Z1522 was used as the cellophane tape. Moreover, the cellophane tape was fixed to a horizontal test stage in advance. One end of the separator substrate was pulled vertically upward at a pulling speed of 50 mm/min to peel off the separator substrate, and the stress during this peeling was measured. Three measurements were made in this manner. An average value of the stress was determined as the peel strength P2 (N/m) and was evaluated by the following standard. The evaluation results are shown in Table 1. A larger peel strength P2 indicates better adhesiveness of a functional layer after immersion in electrolyte solution (wet adhesiveness) and stronger close adherence between an electrode and a functional layer-equipped separator even in electrolyte solution.
A: Peel strength P2 of 2.0 N/m or more
B: Peel strength P2 of not less than 1.0 N/m and less than 2.0 N/m
C: Peel strength P2 of not less than 0.5 N/m and less than 1.0 N/m
D: Peel strength P2 of less than 0.5 N/m

### <Electrolyte solution injectability>

Electrolyte solution was injected into a lithium ion secondary battery produced in each example or comparative example. A state in which the inside of the lithium ion secondary battery was depressurized to -100 kPa was maintained for 1 minute. Thereafter, heat sealing was performed. After 10 minutes, an electrode (positive electrode) was dismantled, and the impregnation state of electrolyte solution in the electrode was visually confirmed. An evaluation was made by the following standard. Impregnation of a greater portion of an electrode with electrolyte solution indicates higher electrolyte solution injectability.
A: Entire surface of electrode impregnated with electrolyte solution
B: Portion of less than 1 cm² in electrode remains unimpregnated with electrolyte solution (excluding case in which entire surface is impregnated)
C: Portion of not less than 1 cm² and less than 1.5 cm² in electrode remains unimpregnated with electrolyte solution
D: Portion of 1.5 cm² or more in electrode remains unimpregnated with electrolyte solution

### <Rate characteristics of secondary battery>

An 800 mAh stacked lithium ion secondary battery produced in each example or comparative example was left at rest in a 25°C environment for 24 hours, was then subjected to a charge/discharge operation of charging to 4.35 V at 0.1C and discharging to 3.0 V at 0.1C in a 25°C environment, and the initial capacity C₀ was measured. The lithium ion secondary battery was subsequently subjected to a charge/discharge operation of charging to 4.35 V at 0.1C and discharging to 3.0 V at 2C in a 25°C environment, and the capacity C₁ was measured. Rate characteristics were evaluated by ΔC = (C₀ - C₁)/C₀ × 100(%), with a larger value indicating better rate characteristics.
A: ΔC of 90% or more
B: ΔC of not less than 85% and less than 90%
C: ΔC of not less than 80% and less than 85%
D: ΔC of less than 80%

### <Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1^{st} cycle was defined as X1, and the discharge capacity of the 100^{th} cycle was defined as X2.

The discharge capacity X1 and the discharge capacity X2 were used to determine a capacity maintenance rate ΔC' (= (X2/X1) × 100(%)) that was then evaluated by the following standard. A larger value for the capacity maintenance rate ΔC' indicates that a secondary battery has better cycle characteristics when subjected to 100 cycles. Note that excellent cycle characteristics of a secondary battery when subjected to 100 cycles are presumed to be a result of good retention of electrolyte solution by a functional layer included in the secondary battery.
A: Capacity maintenance rate ΔC' of 93% or more
B: Capacity maintenance rate ΔC' of not less than 90% and less than 93%
C: Capacity maintenance rate ΔC' of not less than 87% and less than 90%
D: Capacity maintenance rate ΔC' of less than 87%

### (Example 1)

### <Production of particulate polymer (A)>

### [Production of core monomer composition (A)]

A core monomer composition (A) was produced by mixing 65.5 parts of styrene as an aromatic vinyl monomer, 14.4 parts of 2-ethylhexyl acrylate as a (meth)acrylic acid ester monomer, and 0.1 parts of ethylene glycol dimethacrylate as a cross-linkable monomer.

### [Production of shell monomer composition (A)]

A shell monomer composition (A) was produced by mixing 9.9 parts of styrene as an aromatic vinyl monomer, 2.0 parts of butyl acrylate as a (meth)acrylic acid ester monomer, 8.0 parts of acrylonitrile as a nitrile group-containing monomer, and 0.1 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8.0 parts of magnesium chloride dissolved in 200 parts of deionized water under stirring.

### [Suspension polymerization]

A particulate polymer was produced by suspension polymerization. Specifically, the core monomer composition (A) obtained as described above was added to the colloidal dispersion liquid (A) containing magnesium hydroxide, was further stirred therewith, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the core monomer composition (A) in the colloidal dispersion liquid (A) containing magnesium hydroxide.

The magnesium hydroxide-containing colloidal dispersion liquid (A) in which droplets of the monomer composition (A) had been formed was loaded into a reactor, the temperature was raised to 90°C, and a polymerization reaction was performed. At the point at which the polymerization conversion rate had reached almost 100%, the shell monomer composition (B) and 0.1 parts of 2,2'-azobis(2-methyl-N-(2-hydroxyethyl)propionamide) (produced by FUJIFILM Wako Pure Chemical Corporation; product name: V-050; water-soluble) as a shell polymerization initiator dissolved in 10 parts of deionized water were added, the reaction was continued at 70°C for 4 hours, and then water cooling was performed to quench the reaction and subsequently yield a water dispersion containing a particulate polymer. The obtained particulate polymer was confirmed to have a core-shell structure through observation using a scanning electron microscope.

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer.

The glass-transition temperature, degree of swelling in electrolyte solution, volume-average particle diameter, and particle diameter distribution of the obtained particulate polymer were measured. The results are shown in Table 1.

### <Production of water dispersion containing binder (α)>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained binder (α) had a volume-average particle diameter of 0.25 µm and a glass-transition temperature of -40°C.

### <Production of slurry composition (composition for functional layer)>

A pre-mixing slurry was obtained by adding 0.5 parts of polyacrylic acid as a water-soluble polymer to 100 parts of alumina (AKP3000 produced by Sumitomo Chemical Co., Ltd.; volume-average particle diameter: 0.7 µm) as heat-resistant fine particles, adjusting the solid content concentration to 55% through addition of deionized water, and performing mixing using a ball mill.

Next, 0.2 parts of sodium dodecylbenzenesulfonate (NEOPELEX G-15 produced by Kao Corporation) was added as a dispersant relative to 100 parts of the particulate polymer. In addition, 6 parts in terms of solid content of the water dispersion containing the binder (α) and 1.5 parts of carboxymethyl cellulose as a thickener relative to 100 parts of the heat-resistant fine particles were mixed such that the solid content concentration was 40%, and the resultant mixture was added to the pre-mixing slurry obtained as described above. The solid content concentration was further adjusted to 40% through addition of deionized water to yield a slurry composition (composition for a functional layer).

The volume ratio of the heat-resistant fine particles (alumina) and the particulate polymer (heat-resistant fine particles/particulate polymer) in the slurry composition was 70:30.

### <Production of functional layer-equipped separator>

A microporous membrane (thickness: 12 µm) made of polyethylene was prepared as a separator substrate. The composition for a functional layer obtained as described above was applied onto one side of the prepared separator substrate by bar coating. Drying of the coating film was performed at 50°C. The same operations were performed with respect to the other side of the separator substrate to produce a functional layer-equipped separator including functional layers each having heat-resistant fine particle layer thickness of 2.0 µm at both sides of the separator substrate.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

The functional layer-equipped separator obtained as described above was used to determine the volume-average particle diameter and particle diameter distribution of the particulate polymer in a functional layer, the total area proportion occupied by the particulate polymer and particle detachment sites per unit area of the functional layer in plan view of the functional layer, the area proportion occupied by particle detachment sites among the total area of the particulate polymer and particle detachment sites in plan view of the functional layer, the thickness of a heat-resistant fine particle layer, and the ratio of the volume-average particle diameter of the particulate polymer relative to the thickness of the heat-resistant fine particle layer. In addition, the functional layer-equipped separator, positive electrode, and negative electrode obtained as described above were used to evaluate dry adhesiveness and wet adhesiveness of a functional layer. The results are shown in Table 1.

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. In the above, a front surface of the functional layer-equipped separator was arranged such as to face the positive electrode and a rear surface of the functional layer-equipped separator was arranged such as to face the negative electrode. The resultant laminate was wound by a roller to obtain a roll.

This roll was pressed into a flattened form at 50°C and 1 MPa, was subsequently enclosed in an aluminum packing case serving as a battery case, and electrolyte solution (solvent: ethylene carbonate/diethyl carbonate/vinylene carbonate (volume ratio) = 68.5/30/1.5; electrolyte: LiPF₆ of 1 mol in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate cycle characteristics and rate characteristics of a secondary battery. The results are shown in Table 1.

### (Example 2)

A binder (α), a slurry composition, a functional layer-equipped separator, a positive electrode, and a negative electrode were produced and a lithium ion secondary battery was obtained in the same way as in Example 1 with the exception that a core monomer composition (B) produced as described below was used instead of the core monomer composition (A) in production of the slurry composition in Example 1. Various measurements and evaluations were performed in the same way as in Example 1. The results are shown in Table 1. Note that the core monomer composition (B) was produced by mixing 31.6 parts of styrene as an aromatic vinyl monomer, 17.6 parts of butyl acrylate and 30.4 parts of methyl methacrylate as (meth)acrylic acid ester monomers, and 0.4 parts of ethylene glycol dimethacrylate as a cross-linkable monomer. Various measurements and evaluations were performed in the same way as in Example 1. The results are shown in Table 1.

### (Example 3)

A binder (α), a slurry composition, a functional layer-equipped separator, a positive electrode, and a negative electrode were produced and a lithium ion secondary battery was obtained in the same way as in Example 1 with the exception that a core monomer composition (C) produced as described below was used instead of the core monomer composition (A) in production of the slurry composition in Example 1. Various measurements and evaluations were performed in the same way as in Example 1. The results are shown in Table 1. Note that the core monomer composition (C) was produced by mixing 27.6 parts of styrene as an aromatic vinyl monomer, 17.6 parts of butyl acrylate and 34.4 parts of methyl methacrylate as (meth)acrylic acid ester monomers, and 0.4 parts of ethylene glycol dimethacrylate as a cross-linkable monomer. Various measurements and evaluations were performed in the same way as in Example 1. The results are shown in Table 1.

### (Example 4)

A binder (α), a slurry composition, a functional layer-equipped separator, a positive electrode, and a negative electrode were produced and a lithium ion secondary battery was obtained in the same way as in Example 1 with the exception that a core monomer composition (D) produced as described below was used instead of the core monomer composition (A) and a shell monomer composition (B) produced as described below was used instead of the shell monomer composition (A) in production of the slurry composition in Example 1. Various measurements and evaluations were performed in the same way as in Example 1. The results are shown in Table 1. Note that the core monomer composition (D) was produced by mixing 57.5 parts of styrene as an aromatic vinyl monomer, 14.4 parts of butyl acrylate and 8.0 parts of methyl methacrylate as (meth)acrylic acid ester monomers, and 0.1 parts of ethylene glycol dimethacrylate as a cross-linkable monomer. The shell monomer composition (B) was produced by mixing 7.9 parts of styrene as an aromatic vinyl monomer, 4.4 parts of butyl acrylate and 7.6 parts of methyl methacrylate as (meth)acrylic acid ester monomers, and 0.1 parts of ethylene glycol dimethacrylate as a cross-linkable monomer. Various measurements and evaluations were performed in the same way as in Example 1. The results are shown in Table 1.

### (Example 5)

A binder (α), a slurry composition, a functional layer-equipped separator, a positive electrode, and a negative electrode were produced and a lithium ion secondary battery was obtained in the same way as in Example 1 with the exception that a shell monomer composition (C) produced as described below was used instead of the shell monomer composition (A) in production of the slurry composition in Example 1. Various measurements and evaluations were performed in the same way as in Example 1. The results are shown in Table 1. Note that the shell monomer composition (C) was produced by mixing 14.9 parts of styrene as an aromatic vinyl monomer, 2.0 parts of butyl acrylate as a (meth)acrylic acid ester monomer, 3.0 parts of acrylonitrile as a nitrile group-containing monomer, and 0.1 parts of ethylene glycol dimethacrylate as a cross-linkable monomer.

### (Example 6)

A binder (α), a slurry composition, a functional layer-equipped separator, a positive electrode, and a negative electrode were produced and a lithium ion secondary battery was obtained in the same way as in Example 1 with the exception that a shell monomer composition (D) produced as described below was used instead of the shell monomer composition (A) in production of the slurry composition in Example 1. Various measurements and evaluations were performed in the same way as in Example 1. The results are shown in Table 1. Note that the shell monomer composition (D) was produced by mixing 17.8 parts of methyl methacrylate as a (meth)acrylic acid ester monomer, 2.0 parts of acrylonitrile as a nitrile group-containing monomer, and 0.2 parts of ethylene glycol dimethacrylate as a cross-linkable monomer.

### (Example 7)

A binder (α), a slurry composition, a functional layer-equipped separator, a positive electrode, and a negative electrode were produced and a lithium ion secondary battery was obtained in the same way as in Example 1 with the exception that a core monomer composition (E) produced as described below was used instead of the core monomer composition (A) and a shell monomer composition (E) produced as described below was used instead of the shell monomer composition (A) in production of the slurry composition in Example 1. Various measurements and evaluations were performed in the same way as in Example 1. The results are shown in Table 1. Note that the core monomer composition (E) was produced by mixing 81.8 parts of styrene as an aromatic vinyl monomer, 18.0 parts of 2-ethylhexyl acrylate as a (meth)acrylic acid ester monomer, and 0.1 parts of ethylene glycol dimethacrylate as a cross-linkable monomer. The shell monomer composition (E) was produced by mixing 0.0495 parts of styrene as an aromatic vinyl monomer, 0.01 parts of butyl acrylate as a (meth)acrylic acid ester monomer, 0.04 parts of acrylonitrile as a nitrile group-containing monomer, and 0.0005 parts of ethylene glycol dimethacrylate as a cross-linkable monomer. Various measurements and evaluations were performed in the same way as in Example 1. The results are shown in Table 1.

### (Example 8)

A binder (α), a slurry composition, a functional layer-equipped separator, a positive electrode, and a negative electrode were produced and a lithium ion secondary battery was obtained in the same way as in Example 1 with the exception that a core monomer composition (F) produced as described below was used instead of the core monomer composition (A) and a shell monomer composition (F) produced as described below was used instead of the shell monomer composition (A) in production of the slurry composition in Example 1. Various measurements and evaluations were performed in the same way as in Example 1. The results are shown in Table 1. Note that the core monomer composition (F) was produced by mixing 73.7 parts of styrene as an aromatic vinyl monomer, 16.2 parts of 2-ethylhexyl acrylate as a (meth)acrylic acid ester monomer, and 0.1 parts of ethylene glycol dimethacrylate as a cross-linkable monomer. The shell monomer composition (F) was produced by mixing 4.95 parts of styrene as an aromatic vinyl monomer, 1.0 parts of butyl acrylate as a (meth)acrylic acid ester monomer, 4.0 parts of acrylonitrile as a nitrile group-containing monomer, and 0.005 parts of ethylene glycol dimethacrylate as a cross-linkable monomer. Various measurements and evaluations were performed in the same way as in Example 1. The results are shown in Table 1.

### (Example 9)

A binder (α), a slurry composition, a functional layer-equipped separator, a positive electrode, and a negative electrode were produced and a lithium ion secondary battery was obtained in the same way as in Example 1 with the exception that a core monomer composition (G) produced as described below was used instead of the core monomer composition (A) and a shell monomer composition (G) produced as described below was used instead of the shell monomer composition (A) in production of the slurry composition in Example 1. Various measurements and evaluations were performed in the same way as in Example 1. The results are shown in Table 1. Note that the core monomer composition (G) was produced by mixing 40.95 parts of styrene as an aromatic vinyl monomer, 9.0 parts of 2-ethylhexyl acrylate as a (meth)acrylic acid ester monomer, and 0.05 parts of ethylene glycol dimethacrylate as a cross-linkable monomer. The shell monomer composition (G) was produced by mixing 24.75 parts of styrene as an aromatic vinyl monomer, 5.0 parts of butyl acrylate as a (meth)acrylic acid ester monomer, 20.0 parts of acrylonitrile as a nitrile group-containing monomer, and 0.25 parts of ethylene glycol dimethacrylate as a cross-linkable monomer. Various measurements and evaluations were performed in the same way as in Example 1. The results are shown in Table 1.

### (Example 10)

A binder (α), a slurry composition, a functional layer-equipped separator, a positive electrode, and a negative electrode were produced and a lithium ion secondary battery was obtained in the same way as in Example 1 with the exception that a core monomer composition (H) produced as described below was used instead of the core monomer composition (A) and a shell monomer composition (H) produced as described below was used instead of the shell monomer composition (A) in production of the slurry composition in Example 1. Various measurements and evaluations were performed in the same way as in Example 1. The results are shown in Table 1. Note that the core monomer composition (H) was produced by mixing 49.14 parts of styrene as an aromatic vinyl monomer, 10.8 parts of 2-ethylhexyl acrylate as a (meth)acrylic acid ester monomer, and 0.06 parts of ethylene glycol dimethacrylate as a cross-linkable monomer. The shell monomer composition (H) was produced by mixing 19.8 parts of styrene as an aromatic vinyl monomer, 4.0 parts of butyl acrylate as a (meth)acrylic acid ester monomer, 16.0 parts of acrylonitrile as a nitrile group-containing monomer, and 0.2 parts of ethylene glycol dimethacrylate as a cross-linkable monomer. Various measurements and evaluations were performed in the same way as in Example 1. The results are shown in Table 1.

### (Example 11)

A binder (α), a slurry composition, a functional layer-equipped separator, a positive electrode, and a negative electrode were produced and a lithium ion secondary battery was obtained in the same way as in Example 1 with the exception that a shell monomer composition (I) produced as described below was used instead of the shell monomer composition (A) in production of the slurry composition in Example 1. Various measurements and evaluations were performed in the same way as in Example 1. The results are shown in Table 1. Note that the shell monomer composition (I) was produced by mixing 19.0 parts of methyl methacrylate as a (meth)acrylic acid ester monomer and 1.0 parts of allyl methacrylate as a cross-linkable monomer.

### (Example 12)

A binder (α), a slurry composition, a functional layer-equipped separator, a positive electrode, and a negative electrode were produced and a lithium ion secondary battery was obtained in the same way as in Example 1 with the exception that the time for which high-shear stirring was performed during suspension polymerization in production of a particulate polymer was changed to 10 seconds. Various measurements and evaluations were performed in the same way as in Example 1. The results are shown in Table 1.

### (Example 13)

A particulate polymer, a binder, a composition for a functional layer, a separator, a negative electrode, a positive electrode, and a lithium ion secondary battery were obtained in the same way as in Example 1 with the exception that organic fine particles produced as described below were used instead of alumina particles in production of the composition for a functional layer. Various evaluations were performed in the same way as in Example 1. The results are shown in Table 1.

### <Production of organic fine particles (heat-resistant fine particles)>

A reactor A including a stirrer was charged with 0.20 parts of sodium dodecyl sulfate, 0.30 parts of ammonium persulfate, and 180 parts of deionized water. These materials were mixed to obtain a mixture and were heated to 65°C. Meanwhile, a monomer composition for seed particles was produced in a separate vessel by mixing 80.0 parts of n-butyl acrylate as a (meth)acrylic acid ester monomer, 10.0 parts of methacrylic acid as an acid group-containing monomer, 10.0 parts of acrylonitrile as a nitrile group-containing monomer, 0.8 parts of sodium dodecyl sulfate, and 40 parts of deionized water.

This monomer composition for seed particles was continuously added into the above-described reactor A over 4 hours to perform a polymerization reaction. The temperature inside of the reactor was maintained at 65°C during continuous addition of the monomer composition for seed particles. Once the continuous addition was complete, the polymerization reaction was continued for a further 3 hours at 80°C. This yielded a water dispersion of seed particles. The volume-average particle diameter of the seed particles as measured in the same manner as for a binder was 120 nm.

Next, a reactor including a stirrer was charged with 20 parts in terms of solid content of the water dispersion of seed particles (composed of 16 parts of n-butyl acrylate units, 2 parts of methacrylic acid units, and 2 parts of acrylonitrile units), 80 parts of ethylene glycol dimethacrylate (produced by Kyoeisha Chemical Co., Ltd.; product name: LIGHT ESTER EG) as a cross-linkable monomer, 0.8 parts of sodium dodecylbenzenesulfonate, 3.2 parts of t-butyl peroxy-2-ethylhexanoate (produced by NOF Corporation; product name: PERBUTYL O) as a polymerization initiator, and 160 parts of deionized water. These materials were stirred at 35°C for 12 hours to cause complete absorption of the cross-linkable monomer and the polymerization initiator by the seed particles. Thereafter, the temperature inside of the reactor was maintained at 90°C, and a polymerization reaction (seeded polymerization) was performed for 5 hours.

Next, steam was introduced into the reactor, and unreacted monomer and initiator decomposition product were removed to yield a water dispersion of organic fine particles. Upon measurement of the glass-transition temperature of the obtained organic fine particles by the same method as for particulate polymers and a binder, a peak was not observed in the measurement temperature range (-100°C to 200°C). As a result, the glass-transition temperature of the organic fine particles was confirmed to be higher than 200°C.

### (Comparative Example 1)

### <Production of particulate polymer (A)>

### [Production of monomer composition (A)]

A monomer composition (A) was produced by mixing 81.9 parts of styrene as an aromatic vinyl monomer, 18 parts of 2-ethylhexyl acrylate as a (meth)acrylic acid ester monomer, and 0.1 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

### [Suspension polymerization]

A particulate polymer (A) was produced by suspension polymerization. Specifically, the monomer composition (A) obtained as described above was added to the colloidal dispersion liquid (A) containing magnesium hydroxide, was further stirred therewith, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (A) in the colloidal dispersion liquid (A) containing magnesium hydroxide.

The magnesium hydroxide-containing colloidal dispersion liquid (A) in which droplets of the monomer composition (A) had been formed was loaded into a reactor, the temperature was raised to 90°C, and a polymerization reaction was performed for 5 hours to yield a water dispersion containing a particulate polymer (A). With the exception of the above, particulate polymers, a binder, a composition for a functional layer, a separator, a negative electrode, a positive electrode, and a lithium ion secondary battery were obtained in the same way as in Example 1. Various evaluations were performed in the same way as in Example 1. The results are shown in Table 2.

### (Comparative Example 2)

A binder (α), a slurry composition, a functional layer-equipped separator, a positive electrode, and a negative electrode were produced and a lithium ion secondary battery was obtained in the same way as in Comparative Example 1 with the exception that a monomer composition (B) produced as described below was used instead of the monomer composition (A), 2.0 parts of t-butyl peroxy-2-ethylhexanoate (PERBUTYL O produced by NOF Corporation) as a polymerization initiator was changed to 3.6 parts of di(3,5,5-trimethylhexanoyl) peroxide (PEROYL 355 produced by NOF Corporation), and the temperature was raised to 70°C to perform a polymerization reaction in production of the slurry composition in Comparative Example 1. Various measurements and evaluations were performed in the same way as in Example 1. The results are shown in Table 2. Note that the monomer composition (B) was produced by mixing 20.9 parts of n-butyl acrylate as a (meth)acrylic acid ester monomer, 20 parts of acrylonitrile as a nitrile group-containing monomer, 59 parts of methyl methacrylate as a (meth)acrylic acid ester monomer, and 0.1 parts of ethylene glycol dimethacrylate as a cross-linkable monomer.

### (Comparative Example 3)

A binder (α), a slurry composition, a functional layer-equipped separator, a positive electrode, and a negative electrode were produced and a lithium ion secondary battery was obtained in the same way as in Example 1 with the exception that a core monomer composition (I) produced as described below was used instead of the core monomer composition (A) and a shell monomer composition (J) produced as described below was used instead of the shell monomer composition (A) in production of the slurry composition in Example 1. Various measurements and evaluations were performed in the same way as in Example 1. The results are shown in Table 2. Note that the core monomer composition (I) was produced by mixing 56 parts of methyl methacrylate and 20 parts of butyl acrylate as (meth)acrylic acid ester monomers, and 4 parts of allyl methacrylate as a cross-linkable monomer. The shell monomer composition (J) was produced by mixing 9.9 parts of styrene as an aromatic vinyl monomer, 2.0 parts of butyl acrylate as a (meth)acrylic acid ester monomer, 8.0 parts of acrylonitrile as a nitrile group-containing monomer, and 0.1 parts of ethylene glycol dimethacrylate as a cross-linkable monomer. Various measurements and evaluations were performed in the same way as in Example 1. The results are shown in Table 2.

### (Comparative Example 4)

A binder (α), a slurry composition, a functional layer-equipped separator, a positive electrode, and a negative electrode were produced and a lithium ion secondary battery was obtained in the same way as in Example 1 with the exception that a core monomer composition (J) produced as described below was used instead of the core monomer composition (A) and a shell monomer composition (K) produced as described below was used instead of the shell monomer composition (A) in production of the slurry composition in Example 1. Various measurements and evaluations were performed in the same way as in Example 1. The results are shown in Table 2. Note that the core monomer composition (J) was produced by mixing 55.1 parts of styrene as an aromatic vinyl monomer, 10.4 parts of methyl methacrylate and 14.4 parts of butyl acrylate as (meth)acrylic acid ester monomers, and 0.1 parts of ethylene glycol dimethacrylate as a cross-linkable monomer. The shell monomer composition (K) was produced by mixing 14.3 parts of styrene as an aromatic vinyl monomer, 2.0 parts of butyl acrylate as a (meth)acrylic acid ester monomer, 3.6 parts of acrylonitrile as a nitrile group-containing monomer, and 0.1 parts of ethylene glycol dimethacrylate as a cross-linkable monomer. Various measurements and evaluations were performed in the same way as in Example 1. The results are shown in Table 2.

### (Comparative Example 5)

A binder (α), a slurry composition, a functional layer-equipped separator, a positive electrode, and a negative electrode were produced and a lithium ion secondary battery was obtained in the same way as in Example 1 with the exception that a shell monomer composition (L) was used instead of the shell monomer composition (A) in production of the slurry composition in Example 1. Various measurements and evaluations were performed in the same way as in Example 1. The results are shown in Table 2. Note that 20 parts of acrylonitrile as a nitrile group-containing monomer was used as the shell monomer composition (L). Various measurements and evaluations were performed in the same way as in Example 1. The results are shown in Table 2.

### (Comparative Example 6)

A binder (α), a slurry composition, a functional layer-equipped separator, a positive electrode, and a negative electrode were produced and a lithium ion secondary battery was obtained in the same way as in Example 1 with the exception that the core monomer composition (I) was used instead of the core monomer composition (A) and a shell monomer composition (M) produced as described below was used instead of the shell monomer composition (A) in production of the slurry composition in Example 1. Various measurements and evaluations were performed in the same way as in Example 1. The results are shown in Table 2. Note that the shell monomer composition (M) was 20 parts of styrene as an aromatic vinyl monomer.

### (Comparative Example 7)

A functional layer-equipped separator, a positive electrode, and a negative electrode were produced and a lithium ion secondary battery was obtained in the same way as in Example 1 with the exception that a particulate polymer (B) produced as described below was used instead of the particulate polymer (A) in production of a slurry composition. Various measurements and evaluations were performed in the same way as in Example 1. The results are shown in Table 2. A reactor including a stirrer was supplied with 100 parts of deionized water and 0.5 parts of ammonium persulfate. The gas phase of the reactor was purged with nitrogen gas and the temperature was raised to 60°C. Meanwhile, a core portion monomer mixture was obtained in a separate vessel by mixing 50 parts of deionized water, 0.3 parts of sodium dodecylbenzenesulfonate as an emulsifier, 63.1 parts of styrene as an aromatic vinyl monomer, 14.4 parts of 2-ethylhexyl acrylate as a (meth)acrylic acid alkyl ester monomer, 2.4 parts of methacrylic acid (MAA) as an acidic group-containing monomer, and 0.1 parts of ethylene dimethacrylate (EDMA) as a cross-linkable group-containing monomer. The monomer mixture was continuously added to the reactor over 4 hours to carry out polymerization at 60°C. Polymerization was continued until a polymerization conversion rate of 96% was reached to yield a water dispersion containing a particulate polymer forming a core portion. The water dispersion was then heated to 80°C. Shell monomers obtained by mixing 3 parts of styrene, 15.9 parts of methyl methacrylate, 1 part of methacrylic acid, and 0.1 parts of ethylene glycol dimethacrylate were continuously supplied into the water dispersion over 30 minutes, and polymerization was continued. At the point at which the polymerization conversion rate reached 96%, cooling was performed to quench the reaction to yield a water dispersion containing a particulate polymer B. The obtained particulate polymer B had a volume-average particle diameter D50 of 500 nm.

### <Production of slurry composition (composition for functional layer)>

A pre-mixing slurry was obtained by adding 0.5 parts of polyacrylic acid as a water-soluble polymer to 100 parts of alumina (AKP3000 produced by Sumitomo Chemical Co., Ltd.; volume-average particle diameter: 0.7 µm) as heat-resistant fine particles, adjusting the solid content concentration to 55% through addition of deionized water, and performing mixing using a ball mill.

A mixture obtained by mixing 6 parts in terms of solid content of the water dispersion containing the binder (α) and 1.5 parts of carboxymethyl cellulose as a thickener relative to 100 parts of the heat-resistant fine particles such as to have a solid content concentration of 40% was added to the pre-mixing slurry obtained as described above. The solid content concentration was then further adjusted to 40% through addition of deionized water to yield a slurry composition (composition for a functional layer).

The volume ratio (heat-resistant fine particles/particulate polymer (C)) of the heat-resistant fine particles (alumina) and the particulate polymer (C) in the slurry composition was 70:30.

In Tables 1 and 2:
"ST" indicates styrene;
"2EHA" indicates 2-ethylhexyl acrylate;
"EDMA" indicates ethylene glycol dimethacrylate;
"BA" indicates n-butyl acrylate;
"AN" indicates acrylonitrile;
"MAA" indicates methacrylic acid;
"MMA" indicates methyl methacrylate; and
"AMA" indicates allyl methacrylate.

**[Table 1]**

| | | | | Example 1 | Example 2 | Example 3 | Example 4 | Example 5 | Example 6 | Example 7 | Example 8 | Example 9 | Examole 10 | Examole 11 | Examole 12 | Example 13 |
|---|---|---|---|---|---|---|---|---|---|---|---|---|---|---|---|---|
| Composition for functional layer | Particulate polymer | Core portion (polymer A) | Glass-transition temperature [°C] | 66 | 63 | 63 | 66 | 66 | 66 | 66 | 66 | 66 | 66 | 66 | 66 | 66 |
| | | | Chemical composition | ST/2EHA/ EDMA | ST/BA/MMA/ EDMA | ST/BA/MMA/ EDMA | ST/MMA/BA/ EDMA | ST/2EHA/ EDMA | ST/2EHA/ EDMA | ST/2EHA/ EDMA | ST/2EHA/ EDMA | ST/2EHA/ EDMA | ST/2EHA/ EDMA | ST/2EHA/ EDMA | ST/2EHA/ EDMA | ST/2EHA/ EDMA |
| | | | Core composition ratio (core set as 100) | 81.9/18/0.1 | 39.5/22/38/ 0.5 | 34.5/22/43/ 0.5 | 71.9/10/18/ 0.1 | 81.9/18/0.1 | 81.9/18/0.1 | 81.9/18/0.1 | 81.9/18/0.1 | 81.9/18/0.1 | 81.9/18/0.1 | 81.9/18/0.1 | 81.9/18/0.1 | 81.9/18/0.1 |
| | | | Particle composition ratio (inclusive of shell set as 100) | 65.5/14.4/0.1 | 31.6/17.6/ 30.4/0.4 | 27.6/17.6/ 34.4/0.4 | 57.5/8.0/14.4/ 0.1 | 65.5/14.4/0.1 | 65.5/14.4/0.1 | 81.8/18.0/0.1 | 73.7/16.2/0.1 | 40.95/9.0/ 0.05 | 49.14/10.8/ 0.06 | 65.5/14.4/0.1 | 65.5/14.4/0.1 | 65.5/14.4/0.1 |
| | | | Degree of swelling in electrolyte solution S_{A} [factor] | 2 | 6 | 8 | 5 | 2 | 2 | 2 | 2 | 2 | 2 | 2 | 2 | 2 |
| | | Shell portion (polymer B) | Glass-transition temwerature [°C] | 90 | 90 | 90 | 90 | 95 | 100 | 90 | 90 | 90 | 90 | 100 | 90 | 90 |
| | | | Chemical composition | ST/AN/BA/ EDMA | ST/AN/BA/ EDMA | ST/AN/BA/ EDMA | ST/BA/MMA/ EDMA | ST/AN/BA/ EDMA | MMA/AN/ EDMA | ST/AN/BA/ EDMA | ST/AN/BA/ EDMA | ST/AN/BA/ EDMA | ST/AN/BA/ EDMA | MMA/AMA | ST/AN/BA/ EDMA | ST/AN/BA/ EDMA |
| | | | Shell composition ratio (Shell set as 100) | 49.5/40/10/ 0.5 | 49.5/40/10/ 0.5 | 49.5/40/10/ 0.5 | 39.5/22/38/ 0.5 | 74.5/15/10/ 0.5 | 89/10/1 | 49.5/40/10/ 0.5 | 49.5/40/10/ 0.5 | 49.5/40/10/ 0.5 | 49.5/40/10/ 0.5 | 95/5 | 49.5/40/10/ 0.5 | 49.5/40/10/ 0.5 |
| | | | Particle composition ratio (inclusive of shell set as 100) | 9.9/8.0/2.0/ 0.1 | 9.9/8.0/2.0/ 0.1 | 9.9/8.0/2.0/ 0.1 | 7.9/4.417.6/ 0.1 | 14.9/3.0/2.0/ 0.1 | 17.8/2.0/0.2 | 0.0495/0.04/ 0.01/0.0005 | 4.95/4.0/1.0/ 0.005 | 24.75/20/5.0/ 0.25 | 19.8/16.0/4.0/ 0.2 | 19.0/1.0 | 9.9/8.0/2.0/ 0.1 | 9.9/8.0/2.0/ 0.1 |
| | | | Degree of swelling in electrolyte solution S_{B} [factor] | 12 | 12 | 12 | 6 | 5 | 20 | 12 | 12 | 12 | 12 | 20 | 12 | 12 |
| | | Ratio of core and shell (by mass) | | 80:20 | 80:20 | 80:20 | 80:20 | 80:20 | 80:20 | 99.9:0.1 | 90:10 | 50:50 | 60:40 | 80:20 | 80:20 | 80:20 |
| | | Shell degree of swelling/Core degree of swelling (S_{B}/S_{A}) [times] | | 6.0 | 2.0 | 1.5 | 1.2 | 2.5 | 10.0 | 6.0 | 6.0 | 6.0 | 6.0 | 10.0 | 6.0 | 6.0 |
| | | Volume-average partick diameter [µm] | | 6 | 6 | 6 | 6 | 6 | 6 | 6 | 6 | 6 | 6 | 6 | 6 | 6 |
| | | Particle diameter distribution [-] | | 1.2 | 1.2 | 1.2 | 1.2 | 1.2 | 1.2 | 1.2 | 1.2 | 1.2 | 1.2 | 1.2 | 1.5 | 1.2 |
| | | Production method | | Suspension polymerization | Suspension polymerization | Suspension polymerization | Suspension polymerization | Suspension polymerization | Suspension polymerization | Suspension polymerization | Suspension polymerization | Suspension polymerization | Suspension polymerization | Suspension polymerization | Suspension polymerization | Suspension polymerization |
| | Ratio of heat-resistant fine particles and polymer (by volume) | | | 70/30 | 70/30 | 70/30 | 70/30 | 70/30 | 70/30 | 70/30 | 70/30 | 70/30 | 70/30 | 70/30 | 70/30 | 70/30 |
| | Ratio of heat-resistant fine particles and polymer (by mass) | | | 90/10 | 90/10 | 90/10 | 90/10 | 90/10 | 90/10 | 90/10 | 90/10 | 90/10 | 90/10 | 90/10 | 90/10 | 70/30 |
| | Amount of dispersant (parts) *based on 100 parts of particulate polymer | | | 0.2 | 0.2 | 0.2 | 0.2 | 0.2 | 0.2 | 0.2 | 0.2 | 0.2 | 0.2 | 0.2 | 0.2 | 0.2 |
| | Binder | Type | | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE | BA/AN/AMA /MAA/AGE |
| | | Structure | | Particulate | Particulate | Particulate | Particulate | Particulate | Particulate | Particulate | Particulate | Particulate | Particulate | Particulate | Partrulate | Particulate |
| | | Additive amount (mass%) *based on heat-resistant fine particles | | 6 | 6 | 6 | 6 | 6 | 6 | 6 | 6 | 6 | 6 | 6 | 6 | 6 |
| | Heat-resistant fine particles | Type | | Alumina | Alumina | Alumina | Alumina | Alumina | Alumina | Alumina | Alumina | Alumina | Alumina | Alumina | Alumina | FIS |
| | | Volume-average particle diameter [µm] | | 0.5 | 0.5 | 0.5 | 0.5 | 0.5 | 0.5 | 0.5 | 0.5 | 0.5 | 0.5 | 0.5 | 0.5 | 0.2 |
| Functional layer | Heat-resistant fine particle layer thickness [µm] | | | 2 | 2 | 2 | 2 | 2 | 2 | 2 | 2 | 2 | 2 | 2 | 2 | 2 |
| | Particulate polymer particle diameter/ Heat-resistant fine particle layer thickness [-] | | | 3 | 3 | 3 | 3 | 3 | 3 | 3 | 3 | 3 | 3 | 3 | 3 | 3 |
| Evaluation | Dry adhesiveness | | | A | A | A | A | A | A | A | A | A | A | A | A | A |
| | Wet adhesiveness | | | A | A | A | B | B | A | B | B | A | A | B | A | A |
| | Electrolyte solution injectability | | | A | A | B | A | A | B | A | A | B | A | A | A | A |
| | Rate characteristics | | | A | B | B | B | A | B | A | A | B | B | A | A | A |
| | Cycle characteristics | | | A | A | B | B | B | A | B | A | A | A | B | B | A |

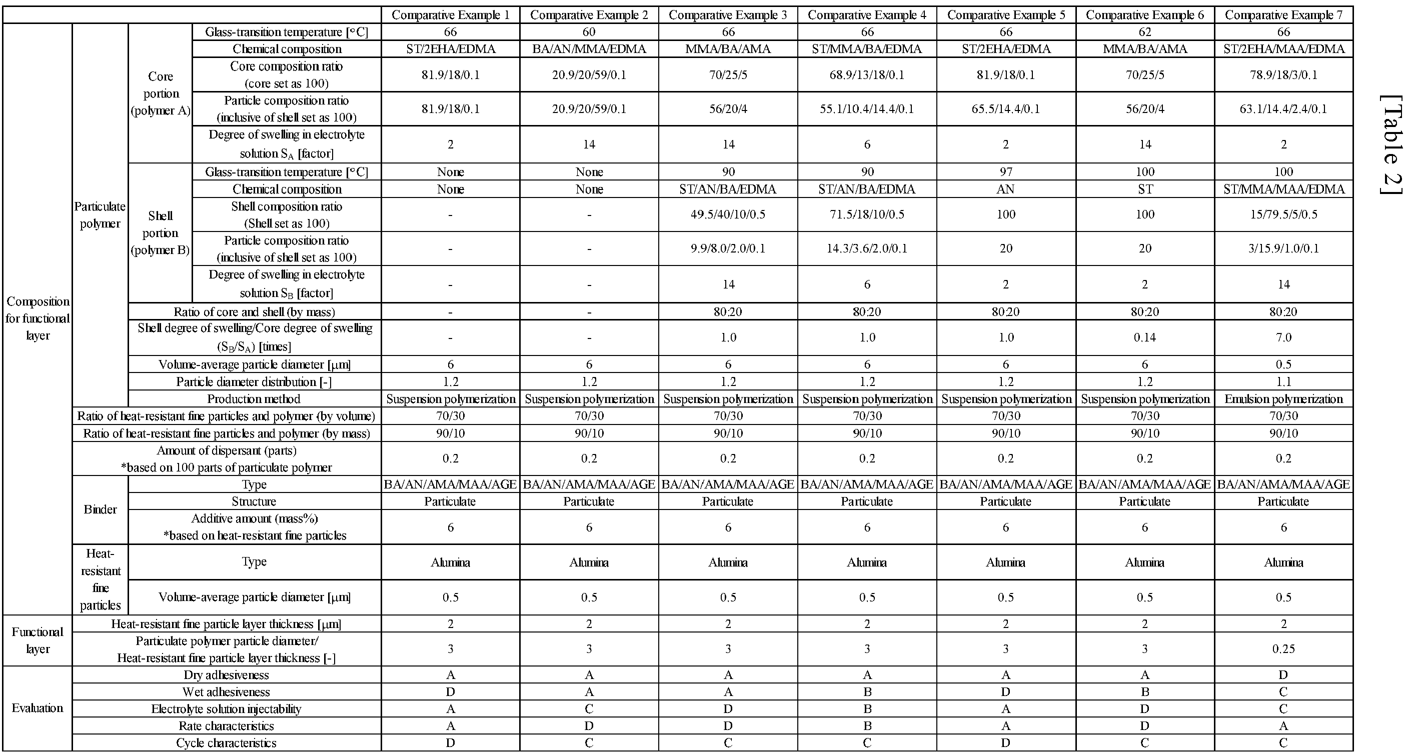

It can be seen from Tables 1 and 2 that it was possible to produce a functional layer having excellent wet adhesiveness and an electrochemical device having excellent electrolyte solution injectability and rate characteristics in Examples 1 to 13 in which the used composition for an electrochemical device functional layer contained a binder, heat-resistant fine particles, and a particulate polymer that had a core-shell structure, satisfied S_{B}/S_{A} ≥ 1.2, and had a volume-average particle diameter of not less than 1.0 µm and not more than 10.0 µm. It can also be seen that it was not possible to sufficiently enhance wet adhesiveness of a functional layer and electrolyte solution injectability and rate characteristics of an electrochemical device in Comparative Examples 1 and 2 in which a particulate polymer not having a core-shell structure was used, Comparative Examples 3 to 6 in which a particulate polymer not satisfying S_{B}/S_{A} ≥ 1.2 was used, and Comparative Example 7 in which a particulate polymer having a volume-average particle diameter of less than 1.0 µm was used.

### INDUSTRIAL APPLICABILITY

According to the present disclosure, it is possible to provide a composition for a functional layer with which it is possible to form a functional layer that has excellent wet adhesiveness and can enhance electrolyte solution injectability and rate characteristics of an obtained electrochemical device.

Moreover, according to the present disclosure, it is possible to provide a laminate for an electrochemical device including a functional layer that has excellent wet adhesiveness and can enhance electrolyte solution injectability and rate characteristics of an obtained electrochemical device, and also to provide an electrochemical device that includes this laminate for an electrochemical device and has excellent electrolyte solution injectability and rate characteristics.

## Claims

1. A composition for an electrochemical device functional layer of a functional layer-equipped separator comprising a particulate polymer, a binder, and heat-resistant fine particles, wherein
the particulate polymer has a core-shell structure including a core portion formed of a polymer A and a shell portion formed of a polymer B that at least partially covers an outer surface of the core portion,
the polymer A includes a (meth)acrylic acid ester monomer unit, an aromatic vinyl monomer unit, and a cross-linkable monomer unit,
the polymer A has a degree of swelling in electrolyte solution S_{A} of not less than a factor of 1 and not more than a factor of 8,
the polymer B includes either or both of an aromatic vinyl monomer unit and a nitrile group-containing monomer unit,
the polymer B has a degree of swelling in electrolyte solution S_{B} of a factor of 4 or more,
the degree of swelling in electrolyte solution S_{A} and the degree of swelling in electrolyte solution S_{B} satisfy a relationship of S_{B}/S_{A} ≥ 1.2, and
the particulate polymer has a volume-average particle diameter of not less than 1.0 µm and not more than 10.0 µm,
the heat-resistant fine particles are selected from a group of inorganic particles and organic particles having a glass-transition temperature of 150°C or higher, and
the degree of swelling in electrolyte solution, the volume-average particle diameter, and the glass transition temperature are measured as described in the examples section of the description.

2. The composition for an electrochemical device functional layer of a functional layer-equipped separator according to claim 1, wherein a ratio of the core portion and the shell portion in the particulate polymer, by mass, is within a range of 99.9:0.1 to 50:50.

3. The composition for an electrochemical device functional layer of a functional layer-equipped separator according to claim 1 or 2, wherein the particulate polymer has a particle diameter distribution of 1.5 or less, measured as described in the examples section of the description.

4. A laminate for an electrochemical device comprising: a substrate; and a functional layer for an electrochemical device formed on the substrate, wherein the functional layer for an electrochemical device is formed using the composition for an electrochemical device functional layer of a functional layer-equipped separator according to any one of claims 1 to 3.

5. An electrochemical device comprising the laminate for an electrochemical device according to claim 4.

## Patentansprüche

1. Zusammensetzung für eine Funktionsschicht einer elektrochemischen Vorrichtung eines mit einer Funktionsschicht versehenen Separators, umfassend ein partikuläres Polymer, ein Bindemittel und hitzebeständige Feinpartikel, wobei
das partikuläre Polymer eine Kern-Schale-Struktur aufweist beinhaltend einen aus einem Polymer A gebildeten Kernbereich und einen aus einem Polymer B gebildeten Schalenbereich, der zumindest teilweise eine äußere Oberfläche des Kernbereichs bedeckt,
das Polymer A eine (Meth)acrylsäureester-Monomereinheit, eine aromatische Vinyl-Monomereinheit und eine vernetzbare Monomereinheit beinhaltet,
das Polymer A einen Quellgrad in Elektrolytlösung S_{A} von nicht weniger als einem Faktor 1 und nicht mehr als einem Faktor 8 aufweist,
das Polymer B entweder eine aromatische Vinyl-Monomereinheit oder eine Nitrilgruppe-enthaltende Monomereinheit oder beide beinhaltet,
das Polymer B einen Quellgrad in Elektrolytlösung S_{B} von einem Faktor von 4 oder mehr aufweist,
der Quellgrad in Elektrolytlösung S_{A} und der Quellgrad in Elektrolytlösung S_{B} die Beziehung S_{B}/S_{A} ≥ 1,2 erfüllen, und
das partikuläre Polymer einen volumenmittleren Partikeldurchmesser von nicht weniger als 1,0 µm und nicht mehr als 10,0 µm aufweist,
die hitzebeständigen Feinpartikel ausgewählt sind aus einer Gruppe von anorganischen Partikeln und organischen Partikeln mit einer Glasübergangstemperatur von 150 °C oder höher, und
der Quellgrad in Elektrolytlösung, der volumenmittlere Partikeldurchmesser und die Glasübergangstemperatur wie im Abschnitt "Beispiele" der Beschreibung beschrieben gemessen werden.

2. Zusammensetzung für eine Funktionsschicht einer elektrochemischen Vorrichtung eines mit einer Funktionsschicht versehenen Separators nach Anspruch 1, wobei das Massenverhältnis von Kernbereich zu Schalenbereich im partikulären Polymer in einem Bereich von 99,9:0,1 bis 50:50 liegt.

3. Zusammensetzung für eine Funktionsschicht einer elektrochemischen Vorrichtung eines mit einer Funktionsschicht versehenen Separators nach Anspruch 1 oder 2, wobei das partikuläre Polymer eine Partikeldurchmesserverteilung von 1,5 oder weniger aufweist, gemessen wie im Abschnitt "Beispiele" der Beschreibung beschrieben.

4. Laminat für eine elektrochemische Vorrichtung, umfassend: ein Substrat; und eine auf dem Substrat gebildete Funktionsschicht für eine elektrochemische Vorrichtung, wobei die Funktionsschicht für eine elektrochemische Vorrichtung unter Verwendung der Zusammensetzung für eine Funktionsschicht einer elektrochemischen Vorrichtung eines mit einer Funktionsschicht versehenen Separators nach einem der Ansprüche 1 bis 3 gebildet wird.

5. Elektrochemische Vorrichtung, umfassend das Laminat für eine elektrochemische Vorrichtung nach Anspruch 4.

## Revendications

1. Composition pour couche fonctionnelle de dispositif électrochimique d'un séparateur équipé d'une couche fonctionnelle comprenant un polymère particulaire, un liant et des particules fines résistantes à la chaleur, dans laquelle
le polymère particulaire présente une structure cœur-gaine comprenant une partie centrale formée d'un polymère A et une partie de gaine formée d'un polymère B qui recouvre au moins partiellement une surface extérieure de la partie centrale,
le polymère A comprend une unité monomère d'ester d'acide (méth)acrylique, une unité monomère de vinyle aromatique et une unité monomère réticulable,
le polymère A présente un degré de gonflement dans une solution électrolytique S_{A} d'au moins un facteur de 1 et d'au plus un facteur de 8,
le polymère B comprend l'une ou l'autre, ou les deux, d'une unité monomère de vinyle aromatique et d'une unité monomère contenant un groupe nitrile,
le polymère B présente un degré de gonflement dans une solution électrolytique S_{B} d'un facteur de 4 ou plus,
le degré de gonflement dans une solution électrolytique S_{A} et le degré de gonflement dans une solution électrolytique S_{B} satisfont une relation de S_{B}/S_{A} ≥ 1,2, et
le polymère particulaire présente un diamètre moyen volumique des particules d'au moins 1,0 µm et d'au plus 10,0 µm,
les particules fines résistantes à la chaleur sont sélectionnées dans un groupe de particules inorganiques et de particules organiques ayant une température de transition vitreuse de 150°C ou plus, et
le degré de gonflement dans une solution électrolytique, le diamètre moyen volumique des particules et la température de transition vitreuse sont mesurés comme décrit dans la section des exemples de la description.

2. Composition pour couche fonctionnelle de dispositif électrochimique d'un séparateur équipé d'une couche fonctionnelle selon la revendication 1, dans laquelle un rapport de la partie centrale et de la partie de gaine dans le polymère particulaire, en masse, est dans une plage de 99,9:0,1 à 50:50.

3. Composition pour couche fonctionnelle de dispositif électrochimique d'un séparateur équipé d'une couche fonctionnelle selon l'une quelconque des revendications 1 ou 2, dans laquelle le polymère particulaire présente une distribution du diamètre des particules de 1,5 ou moins, mesurée comme décrit dans la section des exemples de la description.

4. Stratifié pour dispositif électrochimique comprenant : un substrat ; et une couche fonctionnelle pour dispositif électrochimique formée sur le substrat, dans lequel la couche fonctionnelle pour dispositif électrochimique est formée en utilisant la composition pour couche fonctionnelle de dispositif électrochimique d'un séparateur équipé d'une couche fonctionnelle selon l'une quelconque des revendications 1 à 3.

5. Dispositif électrochimique comprenant le stratifié pour dispositif électrochimique selon la revendication 4.
